# EUROPÄISCHE PATENTSCHRIFT

(11) **EP 0 621 469 B1**
(45) Veröffentlichungstag und Bekanntmachung des Hinweises auf die Patenterteilung: **03.12.1997**
(21) Anmeldenummer: 94106205.1
(22) Anmeldetag: 20.04.1994
(51) Int. Cl.: G01L 1/00, G01L 5/10

(54) **Zugkraftmesseinrichtung**
Tensile force measuring apparatus
Dispositif de mesure de forces de traction

(30) Priorität: 20.04.1993 DE 4312843; 25.09.1993 DE 4332588
(43) Veröffentlichungstag der Anmeldung: 26.10.1994
(73) Patentinhaber: HONIGMANN INDUSTRIELLE ELEKTRONIK GmbH, D-42289 Wuppertal (DE)
(72) Erfinder: Herhaus,Jürgen, D-58256 Ennepetal (DE)
(74) Vertreter: Füssel, Michael

(56) Entgegenhaltungen:
- EP-A- 0 304 226
- DE-A- 4 204 231
- GB-A- 2 136 582
- US-A- 5 113 709

## Beschreibung

Die vorliegende Erfindung betrifft eine Zugkraftmeßeinrichtung zur Messung von Zugkräften von laufenden Endlosmaterialien, welche über eine Umlenkeinrichtung geführt sind und dort mit resultierender Kraft auf den derart federnd abgestützten Lagerbereich eines ortsfest eingespannten Meßkörpers einwirken, daß dabei auftretender Federweg erfaßt und ausgewertet wird.

Eine solche Zugkraftmeßeinrichtung ist bekannt in der Verwendung als Bandzugmeßnabe mit einem Nabengehäuse, welches mittels eines ortsfesten Flansches am Maschinengestell festgelegt wird. In dem Gehäuse ist der Meßkörper angeordnet, welcher in einem Innendurchmesser eine Lagerung trägt. Diese Lagerung dient der Lagerung einer Welle, Walze oder dergleichen. Der Meßkörper ist einseitig fest im Gehäuse angeschlagen. Hieraus ergibt sich, daß derartige Bandzugmeßnaben nur bei endseitiger Lagerung verwendbar sind. Insbesondere ist eine fliegende Lagerung der Umlenkeinrichtung nicht möglich. Weiterhin wird bei dieser Bauform die maximal ertragbare Überlast durch das Gehäuse bestimmt. Deshalb ist die Dimensionierung des Gehäuses nach dem maximal möglichen Lastfall auszulegen.

Dies gilt auch, wenn man berücksichtigt, daß der Meßkörper gegenüber dem Gehäuse mit Anschlagschrauben gegen Überlast gehalten wird. Es hat sich herausgestellt, daß sich die Anschlagschrauben lösen können, sowohl durch den regulären Betrieb infolge von Vibrationen als auch durch unbefugtes Manipulieren. Außerdem zeigt sich, daß sich die Anschlagschrauben bei häufigem Auftreten von Überlasten in den Meßkörper einarbeiten und sich deshalb der vorgegebene Maximalhub im Lauf der Zeit verändert. Will man diesen nachjustieren, so bleibt nur die Möglichkeit, die Verdrehsicherung der Schrauben bei ausgebautem Sensor zu zerstören und diesen in einem geeichten Prüfstand nachzujustieren.

Hieraus ergibt sich der Nachteil, daß, sofern hohe Überlasten zu erwarten sind, nur Sensoren mit relativ großen Gehäusen und / oder geringer Auflösung Verwendung finden können. Demzufolge ist bei diesen Bandzugmeßnaben die Auflösung abhängig von der maximalen Überlast.

Weiterhin ist aus der DE-OS 41 08 555 (=Fü/1/3) eine Meßdose bekannt. Auch diese Meßdose verlangt nach endseitiger Befestigung. Eine fliegende Lagerung ist mit dieser Meßdose ebenfalls nicht möglich. Allerdings tritt bei dieser Meßdose eine erheblich verbesserte Überlastfähigkeit auf, da der Meßkörper einen integrierten Überlastanschlag besitzt. Dieser Überlastanschlag ist jedoch nur in der Meßrichtung wirksam, bzw. solange die Kraftrichtung im wesentlichen mit der Meßrichtung zusammenfällt.

Beiden bekannten Zugkraftmeßeinrichtungen ist zueigen, daß eine modulare Bauweise ermöglicht ist, diese jedoch ihre Grenzen an den oben gezeigten Nachteilen findet.

Dabei ist nicht nur die modulare Bauweise Gegenstand dieser Anmeldung, sondern es kommt insbesondere darauf an, die Zugkraftmeßeinrichtung speziell für die sehr kleinen auftretenden Kräfte bei solchen Umlenkwalzen einzusetzen, wie diese z. B. für die Film-, Folien- und Papierindustrie Anwendung finden.

Hier tritt nämlich das besondere Problem auf, daß derartige Umlenkwalzen bei praktisch vernachlässigbaren Sekundäreinflüssen, z.B. durch Lagerreibung, Sensoren erfordern, die bei sehr kleinen Kräften eine sehr hohe Auflösung liefern.

Deshalb sind extrem leicht laufende Lager erforderlich, die die von der Umlenkwalze ins Lager übertragenen Reibungskräfte praktisch zu NULL reduzieren, sodaß diese im Sensor keinen parasitären Einfluß erzeugen können, die dem eigentlich ausschließlich gewünschten Meßsignal überlagert wird.

Es muß daher im Rahmen der vorliegenden Anmeldung stets berücksichtigt werden, daß bei einer extrem feinen Auflösung im Bereich von einigen wenigen milliNewton trotzdem eine Lagerung der Umlenkwalzen gewährleistet ist, die verhindert, daß das durch die Rotationsbewegung der Walze erzeugte Drehmoment auf den Lagerinnenring in das Meßergebnis mit eingeht.

Aus diesem Grund ist die Zugkraftmeßeinrichtung, die durch die europäische Patentanmeldung mit der Veröffentlichungsnummer 304 226 offenbart ist, für den vorliegenden Anwendungsfall nicht geeignet, sogar gattungsfremd.

Bei dieser Zugkraftmeßeinrichtung wird das von der Umlenkwalze auf den Wälzlagerinnenring eingeleitete Drehmoment als parasitäres Torsionsmoment in die federnde Abstützung eingeleitet.

Dabei verdrallt sich die federnde Abstützung nach Art eines Korkenziehers und abhängig von der Laufrichtung. Deshalb wird das jeweilige Torsionsmoment in vollem Umfang dem eigentlichen Meßsignal überlagert.

Eine meßtechnische Kompensation dieses überlagerten Torsionsmomentes ist nicht möglich.

Deshalb sind derartige Sensoren nicht zur Messung der extrem kleinen Kräfte in der Film-, Folien- sowie Papierindustrie mit der erforderlichen hohen Auflösung geeignet.

Außerdem ist bei diesem Sensor der federnd abgestützte Teil des Sensors statisch unbestimmt gelagert, so daß er eine nicht vorhersehbare Bewegung ausführt, die im Idealfall aus einem Ausweichen in Kraftrichtung verbunden mit gleichzeitigem Neigen des Lagerbereichs zur Normalebene besteht.

Der erforderliche Hub des Sensors muß aber groß sein, um bei dieser Anordnung von Biegefedern ein verwertbares Meßsignal zu erhalten, da ein ausreichend großes Meßsignal nur über eine ausreichend große Dehnung erzielt werden kann.

Dabei ist allerdings zu berücksichtigen, daß der Lagerbereich bei diesem Sensor nicht nur eine Hubbewegung ausführt, sondern zugleich relativ zur Normalebene kippt. Dieser Kippbewegung wird durch die verwendeten Rillenkugellager, die entsprechend viel Lagerluft aufweisen, nichts entgegengesetzt.

Tritt im ausgelenkten Fall zusätzlich noch eine axiale Kraftkomponente hinzu, welche stets vorhanden ist und versuchen wird, die Kippbewegung aufzurichten, so ist im Meßergebnis eine weitere Ungenauigkeit vorhanden.

Andererseits muß gesehen werden, daß eine derartige Sensoranordnung beim Ausfedern des Lagerbereichs stets eine Abstandsveränderung bewirkt, die durch das Loslager ermöglicht wird. Die dabei auftretende axiale Kraft verursacht jedoch zwangsläufig einen weiteren Meßfehler, der die geforderte Auflösung im milli-Newton-Bereich unmöglich macht.

Desweiteren ist aus der oben genannten EP 304 226 aus Figur 1 ein besonderer Sensor bekannt, dessen Baulänge genau auf die Baulänge der zu verwendenden Umlenkwalze abzustimmen ist.

Hieraus ergibt sich der Nachteil, daß für jede, durch den Anwender vorgegebene Walzenbreite ein gesonderter Sensor gefertigt werden muß. Eine modulare Bauweise ist mit diesem System nicht möglich.

Infolge der ungenügenden Befestigung zwischen Maschinenrahmen und Sensor lassen sich fliegende Lagerungen mit diesem System nur für kurze Baulängen und/oder schlanken Walzen realisieren. Desweiteren muß gesehen werden, daß auch hier eine Abstandsänderung zwischen beiden Lagern bei einer Auslenkung stets beide Meßzonen beeinflußt, so daß die geforderte Auflösung im milli-Newton-Bereich nicht realisierbar ist.

Es ist daher Aufgabe der Erfindung, eine Zugkraftmeßeinrichtung speziell für kleine Kräfte zu schaffen, die sowohl eine hohe Auflösung, als auch eine modulare Bauweise ermöglicht, indem sowohl eine endseitige Befestigung, als auch eine fliegende Lagerung der Umlenkeinrichtung an ein und demselben Meßkörper vorgesehen werden kann, wobei insbesondere bei einfachster Fertigung nur ein einziges Prinzip verfolgt werden soll.

Diese Aufgabe wird bei der bekannten Zugkraftmeßeinrichtung dadurch gelöst, daß der Meßkörper zur Einspannung an ortsfest eingespanntem Dorn (Wellenachse) einen Einspannbereich aufweist, der einen massiver geschlossener Ring mit Durchgangsbohrung aufweist, und daß Ring- und Lagerbereich mittels Biegefeder verbunden sind, wobei mittels der Biegefedern eine Parallelogrammführung gebildet wird, wodurch der Lagerbereich von der Biegefeder zur Meßrichtung im wesentlichen parallel fühbar ist.

Aus der Erfindung ergibt sich der Vorteil, daß die Zugkraftmeßeinrichtung, nachfolgend auch Sensor genannt, eine kompakte Bauform aufweist.

Es ist wesentlich für die Erfindung, daß sie ohne zusätzliche Beanspruchung von Platz innerhalb aller bereits vorhandenen Befestigungsbauweisen angewandt werden kann. Somit verbleibt die gesamte Befestigungsperipherie der Umlenkeinrichtung unverändert, wendet man die Erfindung zur Zugkraftmessung an. Zusätzliche, den Platzbedarf erweiternde Maßnahmen sind nicht erforderlich.

Ein weiterer Vorteil ist darin zu sehen, daß die Messung mit einer variablen Winkeleinbaulage erfolgen kann. In diesem Fall hat die Erfindung nämlich richtig erkannt, daß der Meßkörper in beliebigem Drehwinkel auf dem Dorn befestigt werden kann. Außerdem läßt sich mit der Erfindung die Winkellage zwischen der Richtung der resultierenden Kraft und der Meßachse der Zugkraftmeßeinrichtung verstellbar vorsehen. Hierzu ist lediglich die Einspanneinrichtung für den Dorn drehbar zu lagern, sodaß der Dorn zusammen mit der erfindungsgemäßen Zugkraftmeßeinrichtung bei Bedarf gedreht werden kann.

Ein weiterer wesentlicher Vorteil liegt darin, daß die bewegten und federnd gelagerten Massen sehr gering sind. Die bewegten Massen werden lediglich von der Masse der Umlenkeinrichtung und der Masse des Lagerbereichs mit dem jeweils zugehörigen Lager bestimmt. Der Dorn ist im Verhältnis zu diesen Massen mit einer erheblich größeren Masse ausgestattet, sodaß er an einer etwaigen Schwingungsanregung praktisch unbeteiligt ist. Folglich läßt sich mit der Erfindung vorteilhaft die Eigenfrequenz des Systems erhöhen. Die damit erreichbare hohe Steifigkeit ist für derartige Sensoren erwünscht. Dabei wird, im Gegensatz zu den bekannten Lösungen, die Auflösegenauigkeit von wenigen milliNewton gewährleistet. Infolge der hohen Systemeigenfrequenz wird erstmals eine sehr schnelle, hochdynamische amplituden- und frequenzgetreue Meßwerterfassung ermöglicht. Außerdem hat sich gezeigt, daß die hohe Federsteifigkeit und die geringe gefederte Masse den Sensor sehr unempfindlich gegenüber Maschinenvibrationen, z. B. bedingt durch hohe Walzendrehzahlen, macht.

Ein weiterer Vorteil der Erfindung ist die Möglichkeit, erstmalig einen modulartigen Sensor zu haben, mit dem eine fliegende Lagerung realisierbar ist, und dies bei exakter Einhaltung der reproduzierbaren Meßgenauigkeit unabhängig von der Krafteinleitungsstelle, wie im folgenden noch gezeigt wird.

Der Vorteil, der sich hieraus ergibt, liegt in einer vereinfachten Lagerhaltung mit einer sehr geringen Anzahl unterschied licher Baugrößen, die trotzdem den gesamten geforderten Meßbereich abdeckt. Dieser Vorteil wird unter anderem dadurch unterstützt, daß mit der Erfindung, sofern der Dorn drehbar gelagert ist, der Meßbereich durch einfache Einstellung eines Winkels zwischen der Meßachse und der Richtung der resultierenden Kraft vorbestimmt werden kann.

Ein weiterer Vorteil der Erfindung liegt in der Hebelarm-unabhängigen Messung beim Einsatz zur Bahnzugmessung. Die Erfindung macht sich dann nämlich die Erkenntnis zunutze, daß bei Umlenkwalzen im Bereich der Papier-, Folien- und Filmindustrie die zu messende Kraft stets auf beide Sensoren einwirkt und zwar mit konstanter Summe durch Addition beider Meßsignale. Unabhängig von der Stelle der Krafteinleitung in die Umlenkeinrichtung wird die Kraft nämlich stets durch Summenbildung erfaßt.

Darüber hinaus bietet der erfindungsgemäße Sensor den Vorteil, daß er bei extrem hoher Steifigkeit und der damit verbundenen hohen Eigenfrequenz ein hysteresefreies Rückstellverhalten bietet, welches durch sekundäre Relativbewegungen nicht beeinflußt wird.

Es soll jedoch ausdrücklich darauf hingewiesen werden, daß der erfindungsgemäße Sensor nicht ausschließlich zum paarweisen Einsatz in Umlenkwalzen vorgesehen ist. Es sind Ausführungsbeispiele angegeben, bei denen der erfindungsgemäße Sensor zur Zugkraftmessung eines Fadens dient, der über eine Umlenkrolle geführt ist. Bildet man den Sensor so aus, daß Dorn und Meßkörper derart zueinander angeordnet sind, daß der Lagerbereich einen durch Anschlag am Dorn begrenzten Hub ausführt, so bietet dies den Vorteil, daß die maximale Überlast, welcher der Sensor standzuhalten hat, nicht vom Sensor bestimmt wird, sondern lediglich von der Dimensionierung und Festigkeit des Dorns. Demzufolge ist auch bei hohen zu erwartenden Überlasten die Möglichkeit sehr feiner Auflösung für die zu messenden Nennlasten gegeben, ohne den Meßkörper auf die Überlast auslegen zu müssen. Die Baugröße ist somit im wesentlichen unabhängig von der Überlast. Außerdem ist ein wesentlicher Vorteil darin zu sehen, daß der Überlastanschlag in jedem Winkel innerhalb eines Vollkreises von 360 Grad wirkt. Bei dem bekannten Sensor wirkt der durch die Anschlagschrauben definierte Überlastanschlag lediglich in Längsrichtung der Schrauben. Erfahrungsgemäß tritt jedoch eine Überlast stets aus unvorhersagbarer Richtung auf, sodaß der Überlastanschlag des bekannten Sensors nur in einer sehr geringen Zahl von Überlastfällen voll wirksam sein kann.

Ein ganz wesentliches Merkmal des erfindungsgemäßen Sensors ist deshalb der massive geschlossene Ring, der als Einspannbereich dient. Infolge der Tatsache, daß dieser Ring geschlossen ist und massiv ausgeführt werden soll, läßt sich nämlich, wie die Erfindung erkannt hat, der innere Spannungsaufbau des Sensors so vergleichmäßigen, daß er keinen Einfluß auf die Meßgenauigkeit nimmt. Im Gegensatz zu der aus der EP 304 226 bekannten Lösung erfolgt deshalb beim Einspannbereich eine vergleichmäßigte Spannungsverteilung ohne Einfluß in die Biegefedern.

Deshalb kann bei diesem Sensor davon ausgegangen werden, daß mit der Befestigung des Sensors am Dorn keine Veränderung der Sensorgeometrie stattfindet, da insbesondere eine vollkommen gleichmäßige Flächenpressung des Befestigungsbereichs ohne Verspannung der Biegefedern gewährleistet ist.

Deshalb läßt sich mit dem erfindungsgemäßen Sensor stets eine exakte und hysteresefreie Rückstellung des Lagerbereichs auch nach Auslenkungen im 1/100 Millimeterbereich erzielen.

Ein weiteres wesentliches Merkmal ist die vorgegebene Sensorgenauigkeit jeweils einer Vielzahl von Sensoren gleicher Baugröße, da die Genauigkeit, und dies im Gegensatz zur Lösung der EP 304 226, nicht abhängig ist von den Einspannverhältnissen, Anzugsdrehmomenten, anwenderseitig vorgegebenen Geometrien etc..

Ein weiteres wesentliches Merkmal der Erfindung ist die Verbindung zwischen Ring und Lagerbereich derart, daß der Lagerbereich von den Biegefedern zur Meßrichtung im wesentlichen parallel geführt ist. Hierzu sind die freien Enden der Biegefedern mit dem Lagerbereich der Wälzkörperlagerung verbunden. Dieser Lagerbereich übernimmt die Funktion des starren Lenkers für beide Doppelbiegebalken.

Aus diesen Merkmalen folgt, daß der Sensor bei hervorragender Auflösung bis in den milliNewtonbereich und geringem Hub eine sehr hohe Steifigkeit besitzt, und damit eine hohe Eigenfrequenz.

Vergleicht man Sensoren gleicher Balkenlängen, so liefert der erfindungsgemäße Sensor mit parallelgeführten Doppelbiegebalken im Vergleich zu einem Sensor mit Einfachbiegebalken gem. der EP 304 226 bereits bei einem 1/4 Hub dasselbe Ausgangssignal.

Durch den geringen Hub ergibt sich der Vorteil, daß berührungsfreie Spaltdichtungen verwendet werden können, deren Spalt sehr klein ist. Hierzu bieten sich insbesondere Labyrinthscheiben, Stauscheiben an.

Darüberhinaus liegt ein besonderer Vorteil der Erfindung darin, daß das parasitäre Drehmoment aus der Lagerreibung ohne Einfluß ist. Vorteilhaft können die Biegefedern in Umfangsrichtung ein sehr hohes Widerstandsmoment aufweisen. Vorteilhaft ist weiterhin, daß dies bereits bei Sensoren für sehr kleine Nennlasten möglich ist.

Damit kann zusätzlich jegliches Torsionsmoment in den Lagerberich verformungsfrei abgefangen werden.

Der Sensor kann aus verschiedenen Materialien, Z. B. Aluminium, Stahl usw. beschaffen sein, um eine Anpassung an geforderte Eckdaten zu ermöglichen.

Die Weiterbildung nach Anspruch 2 eignet sich für hohe und sehr hohe Lasten. Sie entspricht dem Prinzip Scherkraftaufnehmer und erfaßt die reinen durch Schubspannungen verursachten Dehnungen unter +/- 45 Grad. Für geringe Belastungen wird die Weiterbildung nach Anspruch 3 verwendet.

Die Weiterbildung nach Anspruch 3 bietet den Vorteil, daß sich derartige Sensoren ohne weiteres in großen Stückzahlen und im Durchlaufverfahren auf entsprechend programmierbaren Maschinen herstellen lassen.

Die damit erzeugbare gleichbleibende Federsteifigkeit einer Vielzahl von Sensoren kommt der Forderung nach universellen und austauschbaren Funktionsmodulen vorteilhaft entgegen.

Aus den Merkmalen des Anspruchs 4 ergibt sich der Vorteil, daß insgesamt eine sehr kurze Baulänge erzielt werden kann. Darüber hinaus läßt sich ein homogener und ungestörter Faserverlauf im Biegefedermaterial realisieren, da zwischen dem Endbereich des Rohrs und dem Lagerbereich ein linearer Faserverlauf erwartet werden kann.

Die Weiterbildung nach Anspruch 5 dient der Erhöhung der Empfindlichkeit. Mit diesen Maßnahmen wird eine Umarbeitung des Rohrquerschnitts in den elastischen Zonen erreicht. Die gekrümmten Mantelflächen des Rohrs werden abgetragen und zu Biegefedern mit Rechteckquerschnitt, sodaß die Zonen linear elastisch verformt werden. Dazwischenliegende Bereiche können jedoch zur Erhöhung der Steifigkeit mit einem entsprechenden Querschnitt höheren Widerstandsmoments versehen werden.

Aus den Merkmalen des Anspruchs 6 ergibt sich der Vorteil, daß bereits in der Fertigung eine Vorzentrierung des Sensors, bzw. der Sensoren bezüglich des Dorns erfolgen kann. Hieraus läßt sich insbesondere eine verspannungsfreie Lagermontage erzielen, so daß der geforderte Leichtlauf durch diese Merkmale verbessert wird.

Die Merkmale des Anspruchs 7 dienen einer einfachen Montage ebenso, wie der einfachen Auswechselbarkeit. Hierzu bieten sich insbesondere die Weiterbildungen nach den Ansprüchen 8 und 9 an.

Die Weiterbildung nach Anspruch 10 betrifft eine Zugkraftmeßeinrichtung, die zur Zugkraftmessung bahnförmigen Gutes geeignet ist.

In diesem Fall ist ein Paar von Meßkörpern von jeweils einer der offenen Walzenseiten in das Walzeninnere hineinragend angeordnet und auf jeweils einem separaten, frei auskragenden Dorn gelagert. Eine andere Ausführungsform sieht vor, den Dorn durchgehend auszugestalten und an beiden Enden jeweils fest einzuspannen. Andererseits sitzen jedoch die beiden Meßkörper paarweise auf dem Dorn und tragen die Wälzkörperlagerung für die Umlenkwalze.

Die Weiterbildung nach Anspruch 11 bietet die Möglichkeit, eine Umlenkwalze mit Hebelarm-unabhängigem Meßergebnis fliegend zu lagern.

Hierbei kommt der Weiterbildung nach Anspruch 12 besonderes Augenmerk zu. In diesem Fall läßt sich nämlich mit Hilfe der Erfindung eine Bahnzugmessung mit einem einzigen Sensor zuverlässig durchführen, wobei allerdings die axiale Länge der Umlenkwalze notwendigerweise begrenzt sein muß. Diese Weiterbildung bietet sich vorteilhaft dann an, wenn man übersehen kann, daß die zu messende Kraft stets an der gleichen Stelle in den Sensor eingeleitet wird.

Aus den Merkmalen des Anspruchs 13 ergibt sich eine weitere Bauform bei welcher erstmals zwei ungleichartige Sensoren miteinander kombiniert werden können, um z. B. unsymmetrische Einbauverhältnisse zu berücksichtigen. Damit können extrem kleine Lager verwendet werden, wo der stirnseitig angebrachte Sensor sitzt, wodurch der Leichtlauf begünstigt wird.

Diesen drei Ausführungsformen kommt die Weiterbildung nach Anspruch 14 zugute, womit eine Verschmutzung des Walzeninneren vermieden wird.

Eine Weiterbildung der Erfindung sieht vor, daß anstelle von Abweisgewinden sogenannte Stauscheiben verwendet werden können. Derartige Stauscheiben dichten den Innenraum der Umlenkwalze unter Bildung eines ringförmigen Luftspalts berührungsfrei gegenüber der Umgebung ab, wodurch der Leichtlauf derartiger Umlenkeinrichtungen gefördert wird.

Anspruch 15 betrifft eine Weiterbildung mit spielfreier Passung zwischen Dorn und Meßkörper, so daß bereits mit geringen Klemmkräften ein fester Sitz des Meßkörpers auf dem Dorn gewährleistet ist. Eine andere Ausführungsform sieht eine Klebeverbindung zwischen Einspannbereich und Dorn vor, wodurch gänzliche Spannungsfreiheit gewährleistet ist. Die geringen Klemmkräfte bewirken geringe Materialverspannungen und ermöglichen somit hohe Meßgenauigkeit.

Durch diese Merkmale kann der Sensor sehr leicht und kompakt ausgeführt werden, und dies mit hoher Steifigkeit und hoher Eigenfrequenz.

Die Weiterbildung nach Anspruch 16 bietet den Vorteil, daß sich die Erfindung die, an sich bekannte, Stützwirkung eines Werkstoffs zunutze macht. Diese Stützwirkung beruht, wie ansich bekannt, darauf, daß die äußeren Materialschichten des Dornes eine höhere Festigkeit besitzen als der Dorn im Bereich seiner neutralen Faser.

Demzufolge wirkt der Dorn steifer und stabiler und kann bei gleicher Baugröße höhere Lasten aufnehmen.

Als Härteverfahren kommen insbesondere die Oberflächenhärteverfahren wie Nitrieren oder Abschrecken in Frage.

Aus den Merkmalen des Anspruchs 17 ergibt sich eine Weiterbildung der Erfindung mit dem Vorteil, daß sich eine Vielzahl unterschiedlicher Befestigungsvarianten des Sensors am Dorn realisieren lassen. Insbesondere kann durch diese Merkmale eine konstruktive Anpassung der einzelnen Bauteile an die jeweils anwenderseitig vorgegebenen Einbausituationen erfolgen. Dabei soll insbesondere auch erwähnt sein, daß sich für die einzelnen Bestandteile des Dorns unterschiedliche Materialien anbieten, die jeweils miteinander kombinierbar sind. Durch die Teilung des Dorns wird außerdem erreicht, daß der Spannungsverlauf, sofern erforderlich, unterbrochen werden kann. Hohe Biegesteifigkeit bei kleinen äußeren Anschlußmaßen ermöglicht erstmals leichte und steife Rohrkörper.

Die Weiterbildung nach Anspruch 18 bietet eine leichte und stabile Ausführung.

Eine einfache Montage des Achszapfens am restlichen Dorn wird durch die Merkmale des Anspruchs 19 realisiert.

Den Merkmalen der Ansprüche 20 bis 21 kommen dabei besondere Aufmerksamkeit zu. Wie die Erfindung nämlich erkannt hat, ist bei der Lagerung von Umlenkwalzen zu berücksichtigen, daß eines der Lager als Loslager und das andere der Lager als Festlager ausgeführt werden muß, um z. B. eine temperaturbedingte Längenausdehnung zu ermöglichen.

Darüber hinaus greift am Lageraußenring die zu messende Kraft als Umfangslast an, so daß der Außenring stets mit dem erforderlichen Pressitz auszustatten ist, während der Lagerinnenring, der am Lagerbereich des Sensors sitzt, mit Übergangspassung versehen sein kann. Bedingt durch die spezielle Bauform des Sensors ist die Montage des Lageraußenrings unproblematisch, da die erforderlichen Einpresskräfte nicht über den Lagerbereich des Sensors eingeleitet werden müssen. Bei der Demontage allerdings müssen die Austreibkräfte auf die Biegefedern geleitet werden, was unerwünscht ist, insbesondere bei den empfindlichen Biegefedern von Sensoren mit kleinen Nennmeßkräften.

Um dies zu vermeiden, sind die Merkmale der Ansprüche 20 und 21 von Vorteil.

Die Weiterbildung nach Anspruch 22 bietet den Vorteil der einfachen Herausführung der elektrischen Verbindungsleitungen aus dem Bereich des Meßkörpers.

Grundsätzlich ist es jedoch auch möglich, die Verformung des Meßkörpers optisch, kapazitiv oder induktiv, das heißt berührungslos, zu erfassen.

Die Ausführungsform nach Anspruch 22 kann vorteilhaft als sogenannte Wheatstone 'sche Vollbrücke realisiert werden, die bereits bei geringen Verstimmungen zu einem zuverlässigen Ausgangssignal führt. Insbesondere in Verbindung mit dem erfindungsgemäßen Doppelbiegebalken ist die Wheatstone'sche Vollbrücke zweckmäßig.

Hierzu bietet die Weiterbildung nach Anspruch 23 den Vorteil, daß die Verbindungsleitungen unsichtbar und geschützt verlegt werden können.

Die Weiterbildung nach Anspruch 24 ist mit einfachen Mitteln zu fertigen.

Die Weiterbildungen nach den Ansprüchen 25 - 27 betreffen vorteilhafte Ausgestaltungen.

Die Erfindung ermöglicht sowohl das berührungslose Abtasten des Belastungsweges als auch den Einsatz von kapazitiven, induktiven Meßwertaufnehmern oder Hall-Elementen. Gleichsam kann ein berührungsloses Laser - Abtastsystem von Vorteil sein.

Wesentlich ist, daß die Wegerfassung nicht zwangsläufig an den Biegefedern erfolgen muß, sondern grundsätzlich an allen bewegbaren Teilen der Zugkraftmeßeinrichtung stattfinden kann.

Die Weiterbildung der Erfindung nach Anspruch 28 ermöglicht, daß der Meßbereich des Sensors durch einfaches Verdrehen zwischen der Richtung der angreifenden Kraft und der Meßachse beliebig eingestellt werden kann. Hierdurch lassen sich mit einer sehr geringen Anzahl von Meßkörpern praktisch alle auftretenden Meßbereiche abdecken.

Der Vorteil, der sich hieraus ergibt, besteht in der Anpassung an eine sich ändernde Umlenkgeometrie, z. B. durch eine im Durchmesser kleiner werdende Ablaufrolle, durch einfaches Verdrehen des Sensors.

Hieraus ergibt sich, daß dank der Erfindung eine die Laufgeometrie bestimmende Leitwalze eingespart werden kann.

Darüber hinaus läßt sich eine On-Line-Kraftzerlegung mit diesen Merkmalen durchführen.

Im folgenden wird die Erfindung anhand von Ausführungsbeispielen näher erläutert.

Es zeigen:
- Fig. 1: ein erstes Ausführungsbeispiel der Erfindung mit einer Umlenkeinrichtung für einen Faden.
- Fig. 1a: ein Ausführungsbeispiel gemäß Figur 1 mit einem drehbar gelagerten Dorn.
- Fig. 2: ein weiteres Ausführungsbeispiel entsprechend Fig.1 mit einem Anschlag am Dorn.
- Fig. 3: eine Detailansicht des Meßkörpers in Seiten-ansicht.
- Fig. 4: eine Ansicht von oben des Meßkörpers gemäß Fig. 3.
- Fig. 5: eine Detailansicht des zweiteiligen Meßkörpers in Seitenansicht.
- Fig. 6: eine achsiale Aufsicht des Ausführungsbeispiels nach Fig. 5.
- Fig. 7: ein Ausführungsbeispiel der Erfindung mit einer auskragend gelagerten Bahnumlenkwalze.
- Fig. 8: ein Ausführungsbeispiel der Erfindung mit einer beidseitig gelagerten Bahnumlenkwalze.
- Fig. 8a: ein Ausführungsbeispiel gemäß Figur 8 mit drehbar gelagertem Dorn.
- Fig. 9: ein Ausführungsbeispiel mit einer beidseitig auskragend gelagerten Bahnumlenkwalze.
- Fig. 10: ein Ausführungsbeispiel für einen erfindungsgemäßen Dorn mit Längsschlitz zur Kabelverlegung.
- Fig. 11: ein weiteres Ausführungsbeispiel mit zentraler Kabelverlegung.
- Fig. 12: ein weiteres Ausführungsbeispiel mit Bahnumlenkwalze und einem einzigen Sensor.
- Fig. 13: ein Ausführungsbeispiel mit einem mehrfach geteilten Dorn.
- Fig. 14: eine Detailansicht des mittleren Teils gemäß der Ansicht aus Figur 13.
- Fig. 15/ Fig. 15a: eine Detailansicht eines Achszapfens.
- Fig. 16: Eine Ansicht zur Darstellung eines Stützrings mit Abdrückgewinde.
- Fig. 17: eine Ansicht von links auf den Stützring mit Abdrückgewinde.
- Fig. 18: eine Anordnung von zwei unterschiedlichen Sensoren in einer Umlenkwalze.
- Fig. 19: einen loslagerseitigen Sensor mit Abschiebehülse
- Fig. 20: einen Sensor mit einstückigem Rohr und umfangsmäßiger Querschnittsverminderung

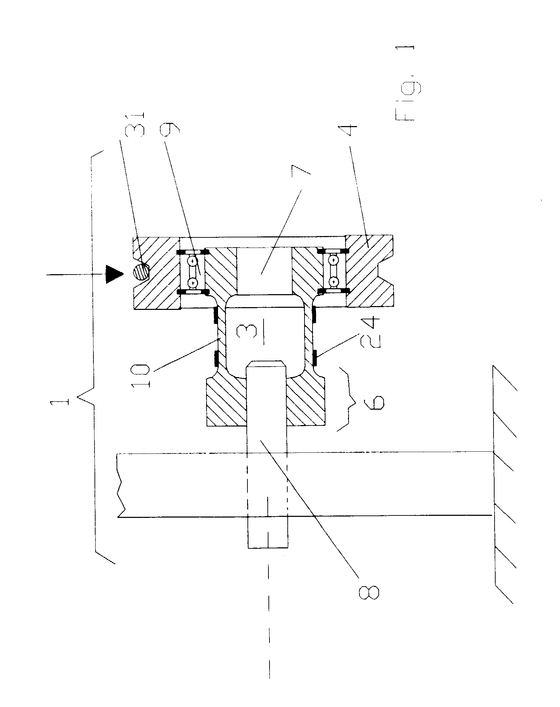

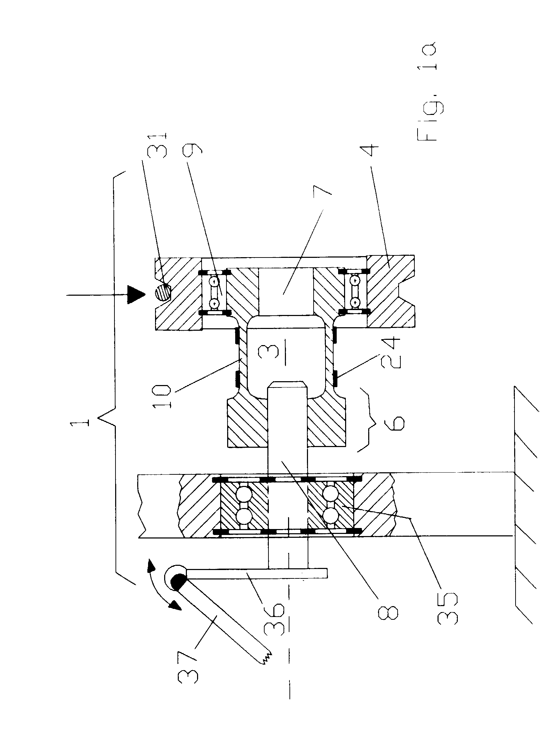

Sofern im folgenden nichts anderes gesagt ist, gilt die nun folgende Beschreibung stets für alle Figuren 1 - 20.

Die Figuren zeigen eine Zugkraftmeßeinrichtung 1 zur Messung von Zugkräften an laufenden Endlosmaterialien, welche über eine Umlenkeinrichtung 2 geführt sind und dort mit resultierender Kraft auf den derart federnd abgestützten Lagerbereich eines ortsfest eingespannten Meßkörpers einwirken, daß der dabei auftretende Federweg erfaßt und ausgewertet wird.

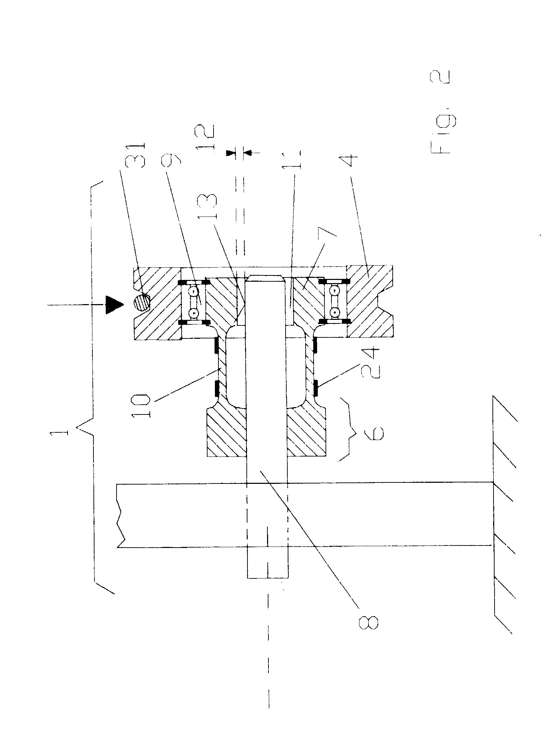

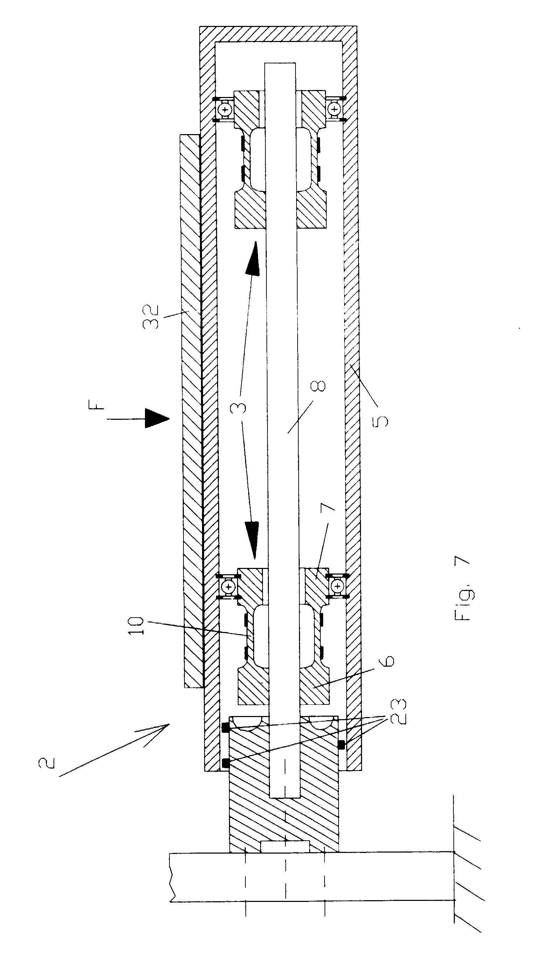

Eine derartige Zugkraftmeßeinrichtung ist z. B. gemäß Figur 1 und 2 mit einer Umlenkrolle 4 für einen laufenden Faden 31 versehen. Im Fall der Figur 7 ist die Umlenkeinrichtung als Umlenkwalze 5 ausgebildet, welche der Umlenkung einer laufenden Bahn 32 dient.

Im vorliegenden Fall ist jeder Meßkörper 3 mit einem Einspannbereich 6 und einem Lagerbereich 7 versehen. Der Einspannbereich 6 und der Lagerbereich 7 sind vorzugsweise zueinander koaxial und konzentrisch ausgebildet und über die Biegefedern 10, auf welche noch genauer eingegangen wird, miteinander verbunden.

Der Einspannbereich weist eine Innenbohrung für den Dorn auf. Der Lagerbereich bildet auf seinem Außenumfang einen Lagersitz für Wälzkörperlagerung.

Jeder Meßkörper 3 sitzt nun mit seinem Einspannbereich 6 fest auf einem ortsfest eingespannten Dorn 8, der die Wellenachse für die Umlenkeinrichtung, nämlich die Umlenkrolle 4 bzw. die Umlenkwalze 5, bildet.

Hierzu ist jeder Einspannbereich 6 als massiver geschlossener Ring 55 ausgebildet, der mit einer Durchgangsbohrung 54 für den Dorn versehen ist.

Der Durchmesser der Durchgangsbohrung kann bezüglich des Dorndurchmessers eine Passung im Sinne einer Zentrierung aufweisen.

An dem Lagerbereich des Meßkörpers 3 ist eine Wälzkörperlagerung vorgesehen, die aus einem Wälzlager 9 besteht, an welchem die Umlenkeinrichtung 4, 5 drehbar gelagert ist.

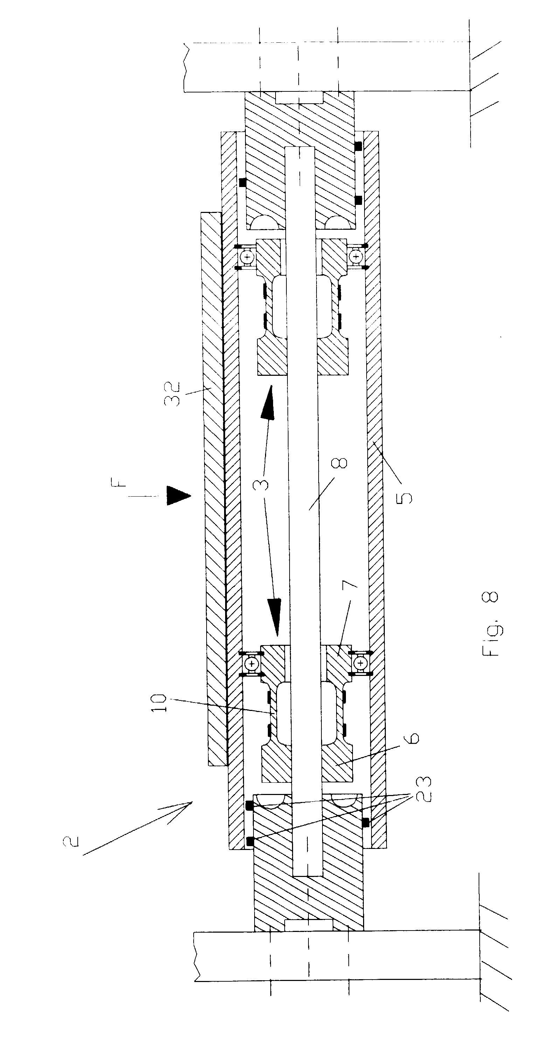

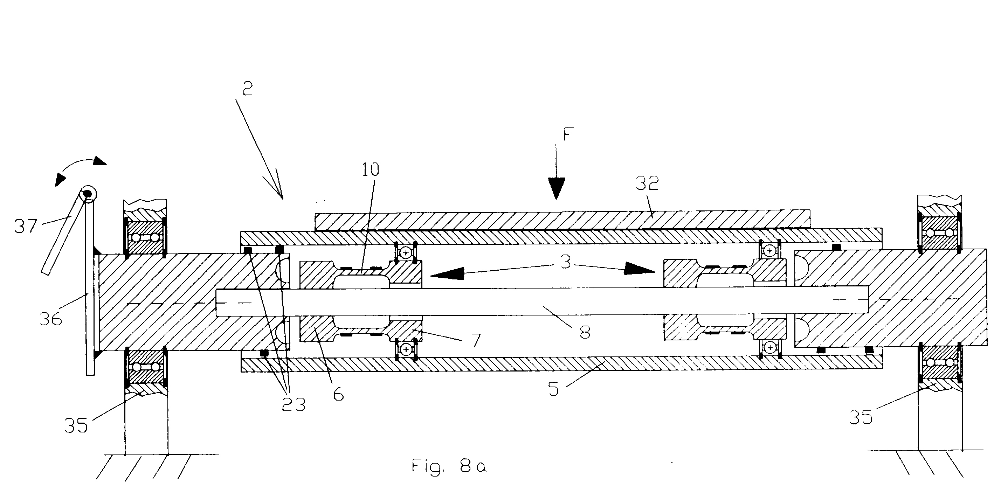

Mit dem Einspannbereich 6 ist der Meßkörper 3 derart fest an dem Dorn 8 angebracht, daß der Lagerbereich 7 gegenüber dem Dorn 8 wenigstens in Richtung der resultierenden Kraft, mit welcher das Endlosmaterial am Lagerbereich angreift, frei beweglich ist. Es ist ersichtlich, daß das Endlosmaterial die Umlenkeinrichtung teilweise umschlingt, und somit mit einer resultierenden Kraft an der Umlenkeinrichtung angreift. Wie zum Beispiel aus Figur 8a ersichtlich ist, erfolgt durch die resultierende Kraft F über die Lagerbereiche eine Verschiebung der Lagerbereiche in Richtung zum Dorn. Dabei werden die jeweils am Lagerbereich befindlichen Enden der Biegefedern durch den Lagerbereich exakt parallel geführt, während die eingespannten Enden der Biegefedern von den Einspannbereichen festgehalten werden. Hieraus folgt, daß jede Biegefeder an ihren beiden Enden parallel zu sich selbst geführt ist. Folglich wird jede der Biegefedern S-förmig ausgelenkt. Auf der Oberseite jeder Biegefeder liegt ein Paar von gleichen Dehnungsmeßstreifen (DMS) symmetrisch zur Längsmitte der jeweiligen Biegefeder. Während der S-förmigen Auslenkung der Biegefeder wird folglich einer der DMS gestaucht, während der andere der DMS gedehnt wird. Da dies an jeweils beiden Biegebalken eines Sensors auftritt, entsteht ein Paar von gedehnten DMS und ein Paar von gestauchten DMS, die zusammen in eine Wheatstone'schen Brücke geschaltet werden. Diesbezüglich wird auf den Stand der Technik Bezug genommen.

Im Fall des Ausführungsbeispiels nach Figur 1 ist der Lagerbereich 7 gegenüber dem Dorn 8 vollkommen frei beweglich. Eine derartige Zugkraftmeßeinrichtung ist dann zu wählen, wenn die Gefahr einer Überlastung des Meßkörpers 3 nicht besteht. Dies kann zum Beispiel bei sehr dünnen Fäden mit lediglich geringer Reißfestigkeit der Fall sein, wenn zu erwarten ist, daß vor einer Überlastung des Sensors ein Fadenriß auftritt.

Für bestimmte Anwendungsfälle kann es jedoch vorteilhaft sein, eine Überlastsicherheit vorzusehen. In diesem Fall bieten sich die Ausführungsbeispiele gemäß Figur 2 bis 20 an.

In diesem Fall sind nämlich Dorn 8 und Meßkörper 3 derart zueinander angeordnet, daß der Lagerbereich 7 einen durch Anschlag am Dorn 8 begrenzten Hub ausführt. Wie sich erkennen läßt, ist der Lagerbereich ringförmig ausgebildet und trägt auf seinem Außenumfang das Wälzlager 9. Die Innenbohrung des Lagerbereichs 7 ist mit einem Durchmesser ausgestattet, der gegenüber dem Außendurchmesser des Dornes 8 geringfügig größer ist.

In diese Bohrung des Lagerbereichs 7 stößt der Dorn 8 mit seinem freien Ende hinein.

Es ist ersichtlich, daß zwischen dem Innendurchmesser des Lagerbereichs 7 und dem Dorn 8 ein Ringspalt 11 verbleibt, der im Normallastfall berührungsfrei ist.

Tritt jedoch, aus welchen Gründen auch immer, eine Überlast auf, so wird der Lagerbereich 7 zunächst innerhalb des freien Hubes 12, den der Ringspalt 11 gewährleistet, soweit ausfedern, daß er auf den Anschlag 13 trifft, den der Dorn 8 mit seinem freien Ende bietet. Dabei erfolgt ein flächiges Anliegen der beiden Anschlagzonen gegeneinander. Somit läßt sich bei geringer Flächenpressung eine gute Kraftverteilung erzielen.

In diesem Fall liegt der Lagerbereich 7 nun auf dem Anschlag 13 auf. Eine weitere Belastung des Lagerbereichs wird also ohne weitere Verformung der Biegefedern unmittelbar in das freie Ende des Dornes 8 eingeleitet, der, im Verhältnis zu den Biegefedern 10 so stabil ist, daß er dieser Last spielend standhält. Eine Deformation der Biegefedern 10 außerhalb des elastischen Bereichs ist somit vollkommen ausgeschlossen.

Der Meßkörper ist somit nicht im Hinblick auf Überlasten zu dimensionieren, sondern lediglich im Hinblick auf die Größe der zu messenden Kraft.

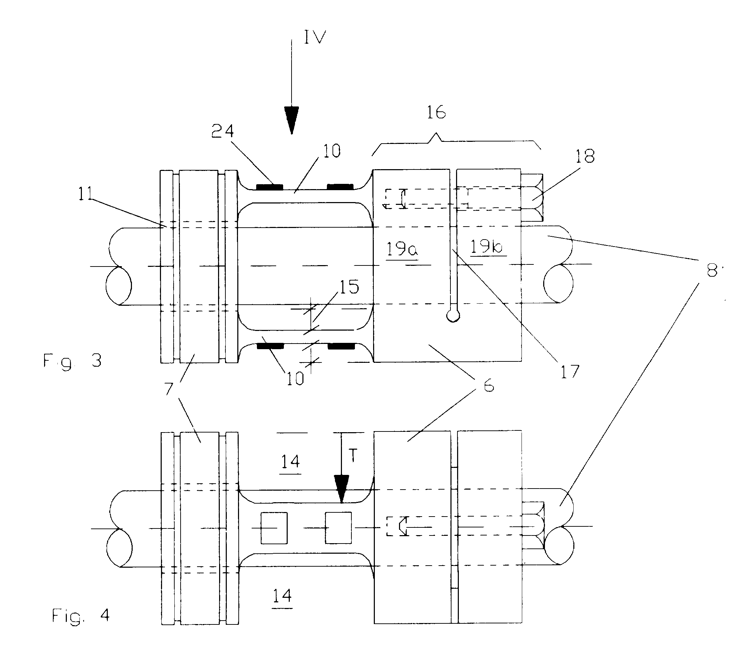

Dabei kann dem vorliegenden Biegemoment, welches in den Dorn eingeleitet wird, durch Durchmesserstufen des Dorns begegnet werden, die in Richtung zur Einspannstelle zunehmen. Wie weiterhin aus den Figuren 3 und 4 zu erkennen ist, sind Einspannbereich 6 und Lagerbereich 7 durch zwei bezüglich der Dornachse ( strichpunktierte Linie ) diametrale Biegefedern 10 verbunden. Die Biegefedern 10 sind gleichartig ausgebildet und erstrecken sich vom Einspannbereich 6 zum Lagerbereich 7 beidseits der Oberfläche des Dornes 8 und mit Abstand zu dieser. Im Lagerbereich sind sie mit dem als Lenker wirkenden zylindrischen Ende des Meßkörpers 3 verbunden. Im Einspannbereich sitzen sie fest an dem ebenfalls zylindrischen Einspannteil des Meßkörpers 3. Auf diese Weise werden Doppelbiegebalken gebildet.

Es ist jedoch ersichtlich, daß der Meßkörper 3 aus einem einstückigen rohrförmigen Teil besteht, aus welchem die Biegefedern 10 durch sekantiale Ausnehmungen 14 aus den Rohrwandungen erzeugt wurden, gegebenenfalls mit Rundungsradien endseitig. Wie hierzu Figur 4 erkennen läßt, die eine Ansicht des Ausführungsbeispiels gemäß Figur 3 aus Richtung IV ist, wurden aus dem einstückigen, ursprünglich rohrförmigen Teil, z. B. mit Hilfe eines Fräsers, die Ausnehmungen 14 sekantial herausgetrennt, wodurch lediglich die schmalen Biegefedern stehengeblieben sind, deren Verformung letztlich gemessen und ausgewertet wird.

Es ist ersichtlich, daß man mit der Tiefe T der sekantialen Ausnehmungen die Empfindlichkeit des Sensors beeinflussen kann.

Eine weitere Möglichkeit der Beeinflussung liegt darin, daß die Biegefedern senkrecht zu der Ebene der Ausnehmung sekantial abgeflacht sein können. Wie hierzu Figur 3 zeigt, können die Biegefedern sowohl vom Rohrinneren als auch vom Rohraußenmantel her abgeflacht sein. In diesen Fällen wird die ursprünglich gekrümmte Rohrmantelkontur der Biegefedern zu einer Kontur rechteckigen Querschnitts mit dem Vorteil einer linearen und genau reproduzierbaren Verformung.

Hierin ist, darauf soll besonders hingewiesen werden, ein wesentlicher Vorteil der Erfindung zu sehen, da mit einfachsten Fertigungsverfahren ein vielseitig verwendbarer hochauflösender Sensor erzeugt wird.

Wie die Figuren 3 bis 6 insbesondere zeigen, ist es vorteilhaft, wenn der Einspannbereich 6 am Dorn 8 mit einer Klemmbefestigungseinrichtung 16 angebracht ist.

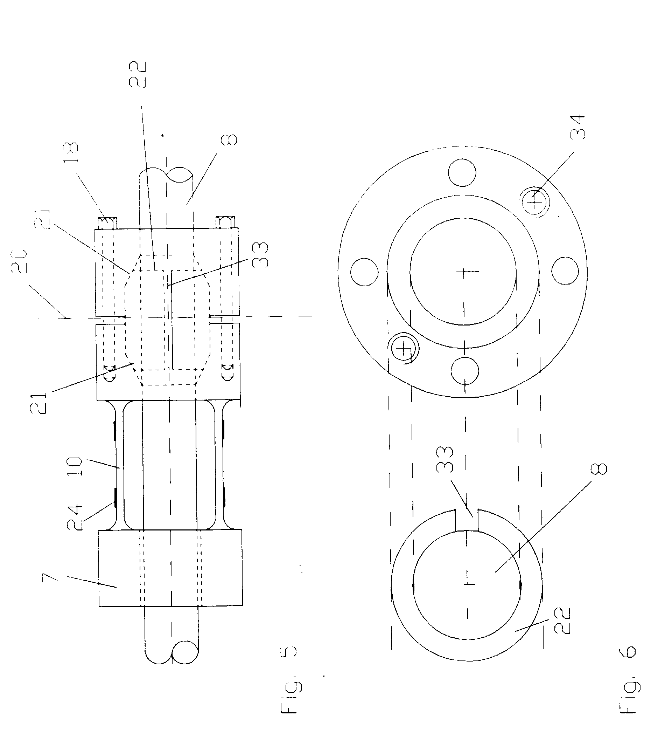

Die Figuren 3 und 4 unterscheiden sich jedoch von dem Ausführungsbeispiel gemäß den Figuren 5 und 6. Während bei den Ausführungsbeispielen nach Figur 3 und 4 der Einspannbereich 6 einen radial verlaufenden Schlitz, der den Dorn schneidet, aufweist, so daß beidseits der Schlitzebene ein Flansch 19a, sowie ein Flansch 19b stehenbleiben, die mittels einer Achsialschraube 18 gegeneinander verspannt werden, so ist das Ausführungsbeispiel nach den Figuren 5 und 6 zweiteilig ausgebildet. Hierauf wird im folgenden noch eingegangen werden. Es ist ersichtlich, daß nach dem Ausführungsbeispiel gemäß Fig. 3 der unmittelbar mit den Biegefedern 10 verbundene Flasch 19a mit einem Innengewinde versehen ist, während der andere der beiden Flansche lediglich eine Spannfläche aufzuweisen braucht. In den Flansch mit der Spannfläche ist eine Durchgangsbohrung eingebracht, welche koaxial zu der Gewindebohrung des Flansches 19a liegt. Die eingesteckte Schraube ist mit ihrem Gewinde lediglich in dem Gewinde des Flansches 19a verschraubt und besitzt endseitig ein gewisses Spiel zum Ende der Gewindesackbohrung.

Hierdurch läßt sich die Schraube frei anziehen und eine Klemmbefestigung des Einspannbereichs 6 erzielen. Das Ausführungsbeispiel nach Figur 5 bzw. Figur 6, ist, wie gesagt, zweiteilig. Die radiale Teilungsebene ist mit 20 gekennzeichnet. In diesem Fall ist auf dem Dorn 8 ein Klemmring 22 aufgebracht, der an seinen beiden stirnseitigen Enden konisch verjüngt ist. Jeder der beiden Teile des Einspannbereichs 7 ist von der Teilungsebene ausgehend zunächst einmal geradzylindrisch angebohrt mit einem Innendurchmesser, welcher dem geradzylindrischen Außendurchmesser des Klemmrings 22 entspricht. Die Gesamtlänge der beiden geradzylindrischen Bohrungen ist etwas geringer als die geradzylindrische Länge des Klemmrings 22, sodaß zwischen den beiden Teilen des Einspannbereichs 6 ein Ringspalt verbleibt. Mit ihren inneren Bereichen sind diese beiden Teile mit einer konisch verjüngten Kegelbohrung versehen, deren Bohrungswinkel dem Konuswinkel des Klemmrings 22 im wesentlichen entspricht. Der so entstehende Einspannbereich 6 wird mittels der, vorzugsweise symmetrisch, vorzugsweise ringförmig angeordneten Axialschrauben 18 gegen die sich konisch erweiternden Bereiche des Klemmrings 22 gepreßt, wodurch beim axialen Zug der Spannschrauben eine Klemmwirkung entsteht, welche den Meßkörper 3 mit seinem Einspannbereich 6 fest auf dem Dorn 8 fixiert.

Wie weiterhin Figur 6 zeigt, ist es vorteilhaft, den Klemmring 22 in Längsrichtung zu schlitzen ( Längsschlitz = 33 ), um einerseits die Montage leicht durchführen zu können und andererseits eine radiale Pressung des Klemmrings 22 auf dem Dorn 8 zu ermöglichen, wenn die Axialschrauben 18 angezogen werden.

Wie weiterhin Figur 6 zeigt, kann wenigstens einer der einzelnen Teile des Einspannbereichs 6 mit einem Abdrückgewinde 34 versehen sein, um die Demontage des Meßkörpers 3 zu erleichtern.

Die Figuren 7 - 9 zeigen darüber hinaus, daß die Umlenkeinrichtung 2 als Umlenkwalze 5 ausgebildet ist, welche an zwei Meßkörpern 3 gelagert ist, die auf einem gemeinsamen Dorn 8 oder auf zwei Dornen 8 angeordnet sind. Im Fall des Ausführungsbeispiels nach Figur 7 sind die beiden Meßkörper 3 einspannseitig und endseitig an einem einzigen Dorn 8 angeordnet, der lediglich von einer Stirnseite in die Umlenkwalze 4 hineinragt. Diese Umlenkwalze ist also fliegend gelagert. Dabei sitzen, wie sich aus Figur 7 erkennen läßt, die beiden Meßkörper so, daß sie mit ihren Einspannbereichen 6 jeweils der festen Einspannstelle des Dornes 8 zugewandt sind. Hierdurch ergeben sich die geringstmöglichen Biegemomente für den Dorn 8.

Im Ausführungsbeispiel gemäß Figur 8 ist der Dorn 8 beidseitig ortsfest gelagert und durchstößt hierzu die beiden stirnseitigen Öffnungen der Umlenkwalze 5.

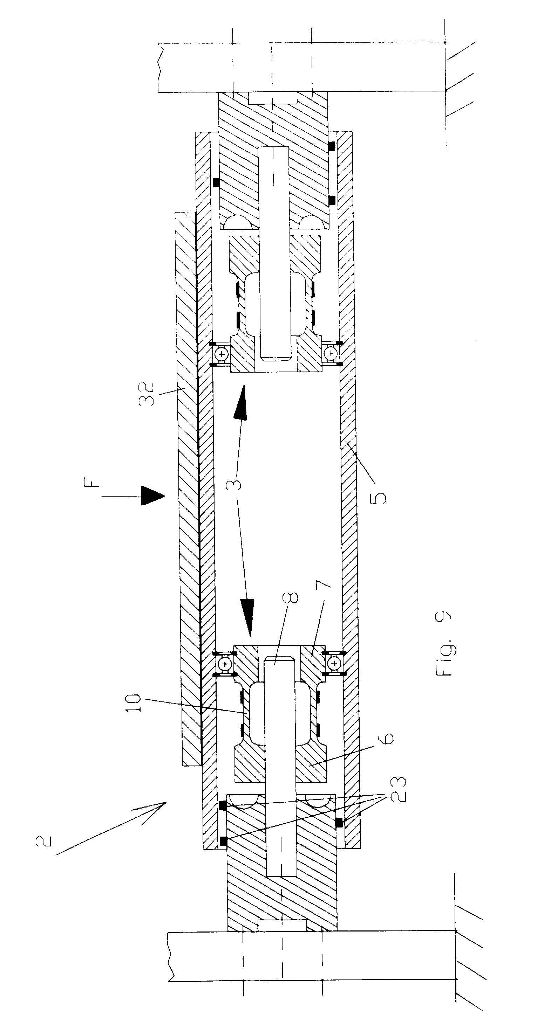

Ein weiteres Ausführungsbeispiel zeigt Figur 9. In diesem Fall ragt in jeweils eine der stirnseitigen Öffnungen der Umlenkwalze 5 ein separater Dorn 8 hinein. Die Dorne 8 berühren sich einander nicht.

Es ist ein wesentlicher Vorteil der Erfindung, daß für diese Ausführungsfälle gemäß den Figuren 7 - 9 die in die Meßkörper 3 eingeleitete Kraft unabhängig vom Ort der Einleitung ist. Dies folgt daraus, daß die Signale, die von den Meßstellen der einzelnen Meßkörper 3 ausgehen, elektrisch addiert werden. Somit erfolgt stets eine Summenmessung der eingeleiteten Kraft und zwar im Ergebnis unabhängig von der Einleitungsstelle.

Weiterhin können die Meßkörper 3 relativ zueinander so verdreht werden, oder so zueinander verdrehbar sein, daß jeder der Meßkörper in einer anderen Ebene mißt. Das kann z. B. für eine Bahnkantensteuerung nützlich sein.

Wie die Figuren weiterhin zeigen, sitzt auf jeder der Biegefedern 10 jeweils ein Paar von sogenannten Dehnungsmeßstreifen (DMS). Jeweils vier derartige Dehnungsmeßstreifen können zu einer sogenannten Wheatstone' schen Vollbrücke zusammengeschaltet werden, die naturgemäß temperaturkompensiert ist und bereits bei geringen Verstimmungen ein genaues und großes Meßsignal liefert. Hierfür müssen innerhalb oder außerhalb der Meßkörper 3 die notwendigen elektrischen Leitungen verlegt werden.

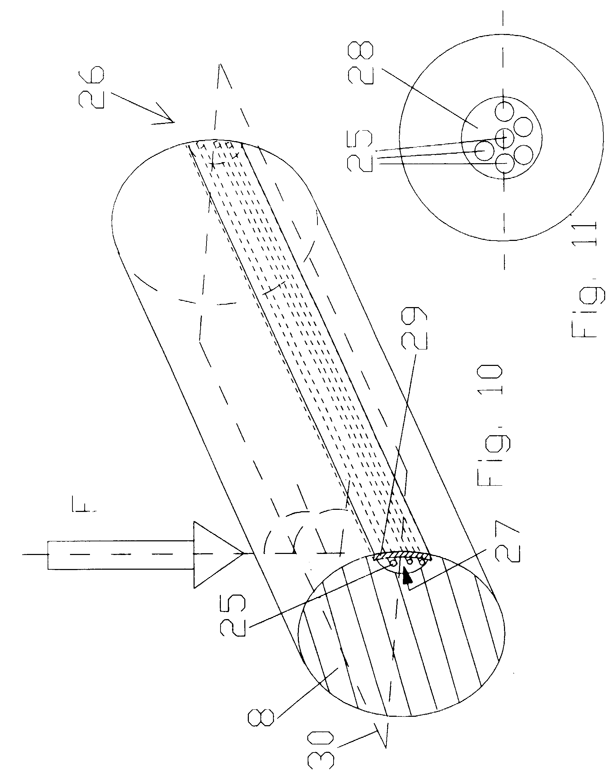

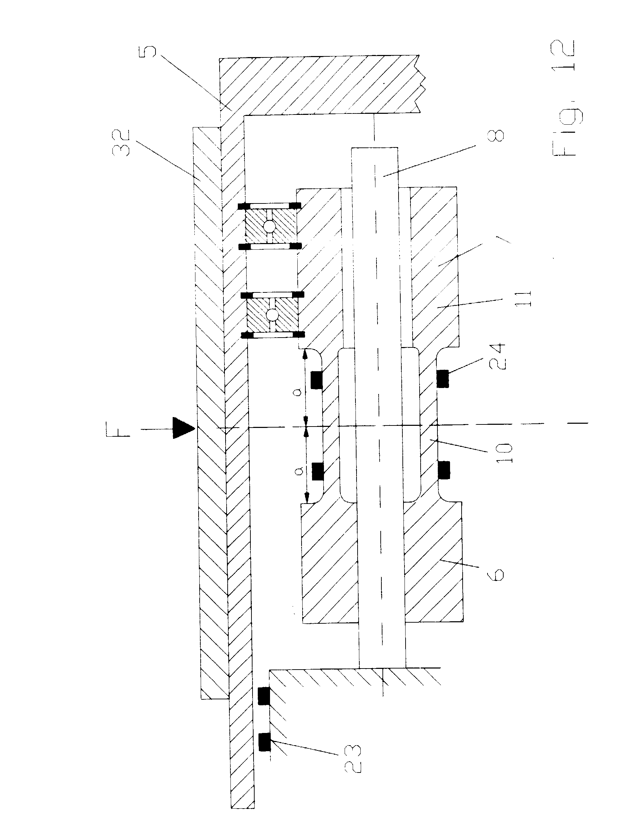

Eine vorteilhafte Weiterbildung ergibt sich deshalb aus den Figuren 10 und 11.

Wie man nämlich dort erkennt, können die elektrischen Verbindungsleitungen 25 von den Meßwertaufnehmern, den DMS 24, entlang des Dornes 8 nach außen geführt werden. Hierzu weist nach dem Ausführungsbeispiel gemäß Figur 10 der Dorn eine Längsausnehmung 26 auf, die als Oberflächenlängsschlitz 27 ausgebildet ist.

Das Ausführungsbeispiel gemäß Figur 11 unterscheidet sich hiervon. In diesem Fall ist die Längsausnehmung eine Längsbohrung 28, welche hier zentral zur Dornachse ausgebildet ist.

Im Ausführungsbeispiel nach Figur 10 ist der Oberflächenlängsschlitz mit einem hinterschnittenen Querschnitt ausgebildet, in welchem eine Abdeckung 29 einrastend angebracht wurde. Gegebenenfalls können, wie man sich leicht vorstellen kann, zwei derartige Oberflächenlängsschlitze 27 in einer zur Richtung der angreifenden Kraft F senkrecht liegende Ebene 30 angeordnet werden. Diese Oberflächenlängsschlitze 27 sind also paarweise vorhanden und liegen sich in der biegeneutralen Ebene 30 diametral gegenüber.

Wie weiterhin erkennbar ist, weist der Dorn 8 in allen Ausführungsbeispielen einen kreisrunden Querschnitt auf, und der Einspannbereich 6 besitzt einen Bohrungsdurchmesser, der dem Außendurchmesser des Sitzes auf dem Dorn angepaßt ist.

Im Ausführungsbeispiel gemäß Figur 5 bzw. 6 dient als Sitz der Außendurchmesser des Klemmrings 22, während dies im Fall des Ausführungsbeispiels nach Figur 3 bzw. 4 unmittelbar die Dornoberfläche ist.

Wie man sich weiterhin vorstellen kann, kann im Eintrittsbereich des Dorns in die Umlenkwalze ein in Drehrichtung der Umlenkwalze nach außen förderndes Abweisgewinde 23 vorgesehen sein.

Zusätzlich zu dem bisher Gesagten zeigen die Figuren la und 8a Zugkraftmeßeinrichtungen, bei denen der Winkel zwischen der resultierenden Kraft und der Meßachse der Zugkraftmeßeinrichtung durch Drehung des Dorns in einer drehbar gelagerten Einspanneinrichtung verstellbar ist.

Hierzu ist die Einspanneinrichtung des Dorns gegenüber dem Maschinengestell drehbar gelagert 35, wobei die jeweilige Drehstellung über einen starr mit dem Dorn verbundenen Hebel 36 und eine entsprechende Anlenkung 37 verändert werden kann. Es soll ausdrücklich gesagt sein, daß die Drehstellung einerseits fest vorgegeben werden kann, um z. B. den Meßbereich des Sensors festzulegen, und daß andererseits die Drehstellung auch während des Betriebes leicht von außen beeinflußt werden kann. Diesen Vorteil bietet die Erfindung im Gegensatz zu allen bislang bekannten Zugkraftsensoren.

Darüber hinaus zeigt Figur 12 eine Zugkraftmeßeinrichtung, bei welcher die Umlenkeinrichtung als Umlenkwalze ausgebildet ist, die an lediglich einem einzigen Meßkörper gelagert ist. Hierzu ist der Lagerbereich des Meßkörpers entsprechend breit zur Aufnahme eines entsprechend breiten zweireihigen Lagers oder, wie hier beispielhaft, zur Aufnahme von zwei zueinander beabstandeten einreihigen Lagern ausgelegt, um etwaige Kippmomente abzufangen.

Vorteilhafterweise bietet es sich an, die Geometrien so aufeinander abzustimmen, daß die resultierende Kraft im wesentlichen in der axialen Mitte der Biegefedern 10 angreift.

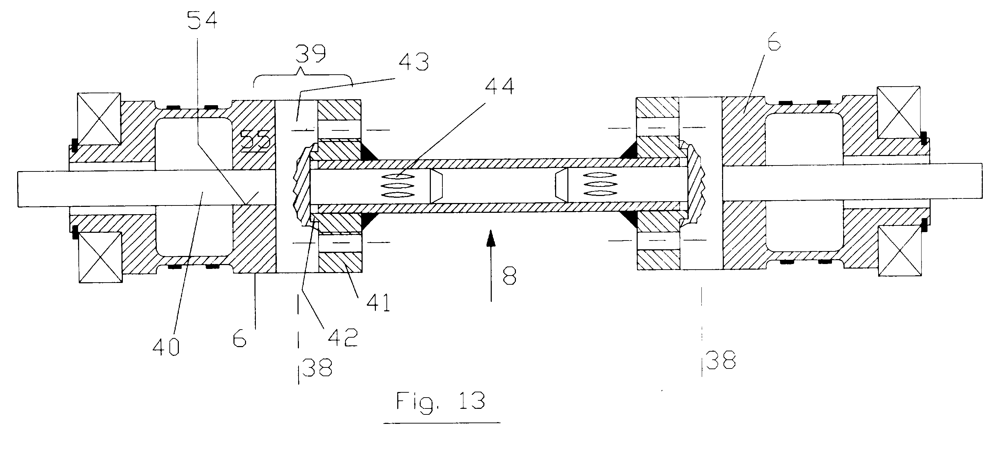

Ergänzend zu dem bisherig gesagten, zeigt Figur 13, daß der Dorn 8 in zwei Radialebenen 38 geteilt ist. Jede der Teilungsebenen ist hier eine auf der Dornachse senkrecht stehende Normalebene.

In jeder der Radialebenen 38 sind Anschlußmittel 39 für einen außenständigen Achszapfen 40 vorgesehen, der hier zur Achse des Dorns 8 koaxial ausgerichtet ist.

Jeder der beiden Sensoren ist mit jeweils seinem Einspannbereich 6 mit dem zugehörigen Achszapfen verbunden. Zu diesem Zweck ist der mittlere Bereich des Dorns 8 als Rohr ausgebildet, welches jeweils an seinen Enden mit einem ringförmigen Flansch 41 verschweißt ist. Der ringförmige Flansch 41 besitzt jeweils einen nach auswärts zeigenden Zentrierring 42, der in eine zentrierte Ausnehmung des Anschraubflansches 43 exakt eingreift. Somit läßt sich zwischen dem Anschraubflansch 43 und dem ringförmigen Flansch 41 eine genau vorgegebene zentrierte Verbindung schaffen. Andererseits ist der Anschraubflansch 43 auf seiner Auswärtsseite mit dem Einspannbereich 6 des Sensors fest verbunden. Der Einspannbereich 6 ist, wie in allen vorangegangenen Figuren als massiver geschlossener Ring ausgebildet, der infolge der zentrierten Passung zwischen ringförmigen Flansch 41 und Anschraubflansch 43 bezüglich der Dornachse genau zentriert sitzt.

Weiterhin zeigt Figur 13, daß der Achszapfen 40 in den mittleren Bereich des Dorns eingesteckt ist. Zur axialen Festlegung des eingesteckten Teils des Achszapfens dienen plastisch verformbare Klemmittel, z. B. Längskerben 44, die einen größeren Durchmesser als den Achszapfendurchmesser aufweisen. Beim Einpressen dieses Teils des Achszapfens werden die erweiterten Durchmesser der Längskerben unter radialer Vorspannung gegen die Innenwandung des rohrförmigen Bereichs des Dorns gepresst, und die auftretende Radialkraft ist bei vollständiger Einpressung des Achszapfens ausreichend groß, um diesen in axialer Richtung im mittleren Dornbereich festzulegen.

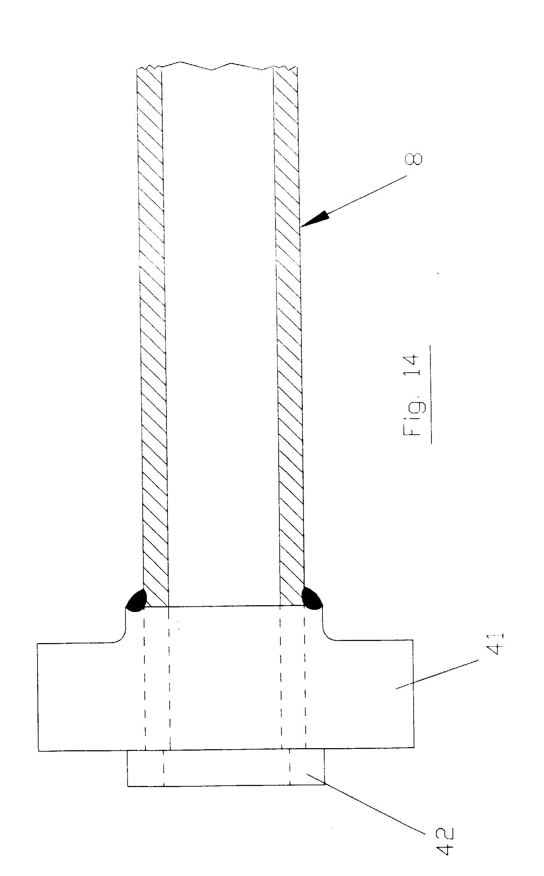

Zum besseren Verständnis zeigt Figur 14 einen Teilausschnitt des mittleren Dornbereichs ohne eingesteckten Achszapfen.

Wie man erkennt, ist der mittlere Bereich als Rohr ausgeführt und in eine entsprechende Bohrung des ringsförmigen Flansches 41 eingesteckt. Der ringförmige Flansch hat einen über den Rohraußendurchmesser hinausragenden Umfang, wodurch sich zwischen dem Rohraußenmantel und dem ringförmigen Flansch 41 eine ringförmige Kehle ausbildet, in welche eine entsprechende Schweißnaht gelegt werden kann.

Auswärtsseitig besitzt der Ringflansch 41 den Zentrierring 42, der seinerseits von einer Bohrung (gestrichelt gezeichnet) durchsetzt ist. Dieser Bohrungsdurchmesser muß mindestens so groß sein wie der Innendurchmeser des mittleren Dornbereichs, so daß der Achszapfen eingesteckt werden kann.

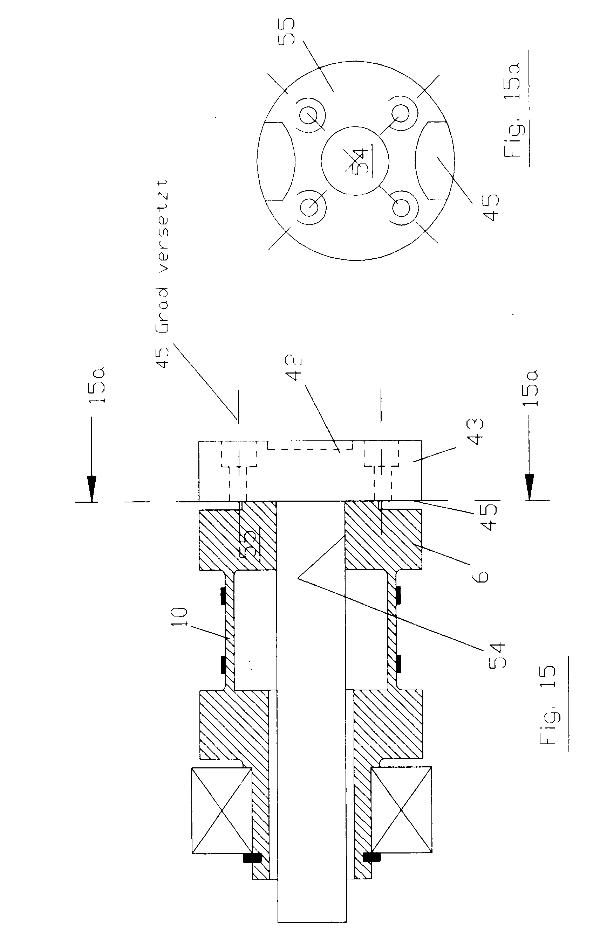

Darüber hinaus zeigt Figur 15 eine weitere Ausführungsform. In diesem Fall ist der Achszapfen lediglich auswärtsseitig als Dorn ausgebildet. Innenseitig zum mittleren Bereich des Dorns dient lediglich der Anschraubflansch 43 zur Befestigung; ein einsteckbarer Achszapfen ist demnach nicht unbedingt vorgesehen, dennoch kann eine entsprechende Zentrierung 42 vorgesehen sein, um den Achszapfen entsprechend zu zentrieren. Eine weitere Besonderheit ist in diesem Ausführungsbeispiel die Befestigung des Einspannbereichs 6 des Sensors. Wie man erkennt, ist der Einspannbereich 6 stirnseitig gegen den Anschraubflansch 43 verschraubt. Die Schraubenlöcher sind ausschließlich innerhalb des Anschraubflanschs 43 angeordnet. Dies heißt, daß die entsprechenden Verschraubungen nicht über die rechte Stirnseite des Anschraubflanschs hinausragen sollen. Zwischen den beiderseitigen Stirnseiten des Einspannbereichs und des Anschraubflanschs 43 sind Ausnehmungen 45 vorgesehen, die lediglich im Bereich der Biegefedern angeordnet sind. Hierzu zeigt Figur 15a die Anordnung der Ausnehmungen 45, die sich diametral zueinander gegenüberliegen.

Die Verschraubung zwischen Einspannbereich und Anschraubflansch erfolgt durch die gezeigten Gewinde. Man erkennt, daß die Gewinde nicht innerhalb der Aussparung 45 liegen.

Die Bedeutung der Aussparungen ist darin zu sehen, daß beim Anziehen der Befestigungsschrauben die beiderseitigen Stirnflächen zwischen Einspannbereich 6 und Anschraubflansch 43 gegeneinander verspannt werden. Dabei ist nicht auszuschließen, daß der Einspannbereich, auch wenn er als massiver geschlossener Ring ausgeführt ist, eine Druckspannung aufbaut, die sich unter Umständen in die Biegefedern abbauen kann.
Dieser Einfluß ist für die hohe Auflösung des erfindungsgemäßen Sensors von Nachteil. Deshalb wird vorgeschlagen, daß die Stirnseite des Einspannbereichs im Bereich der Biegefedern mit einer entsprechenden Aussparung versehen ist, deren Tiefe in der Größenordnung 1/10 Millimeter liegen kann.

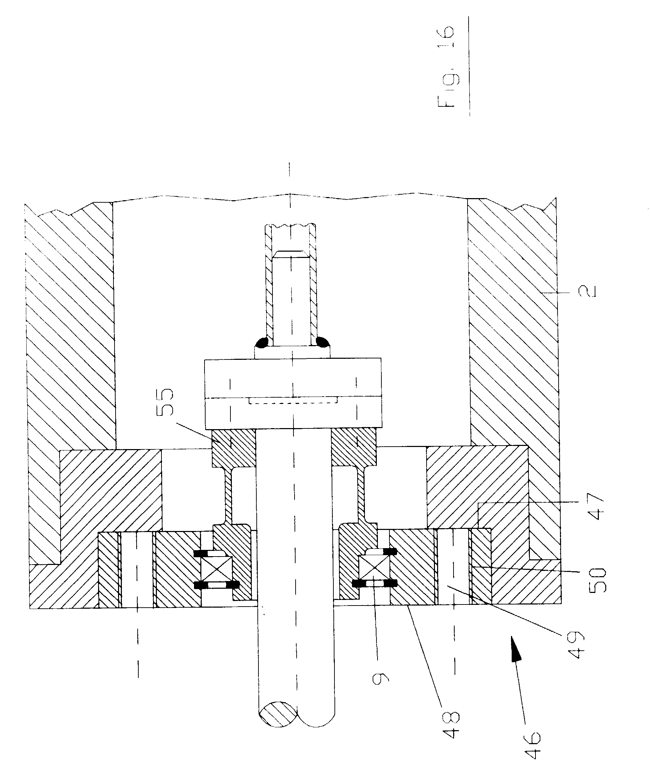

Weiterhin zeigt Figur 16, daß an wenigstens einer der Stirnseiten 46 der Umlenkwalze eine Innendurchmesserstufe mit Ringabsatz 47 vorgesehen sein kann. In dieser Innendurchmesserstufe sitzt ein mit dem Außenring des Wälzlagers 9 verbundener Stützring 48. Der Stützring weist wenigstens eine stirnseitig eingebrachte und bis auf den Ringabsatz 47 durchgehende Bohrung 49 mit Abdrückgewinde 40 auf. Der Stützring 48 kann seinerseits mit der Umlenkwalze 2 verschraubt sein.

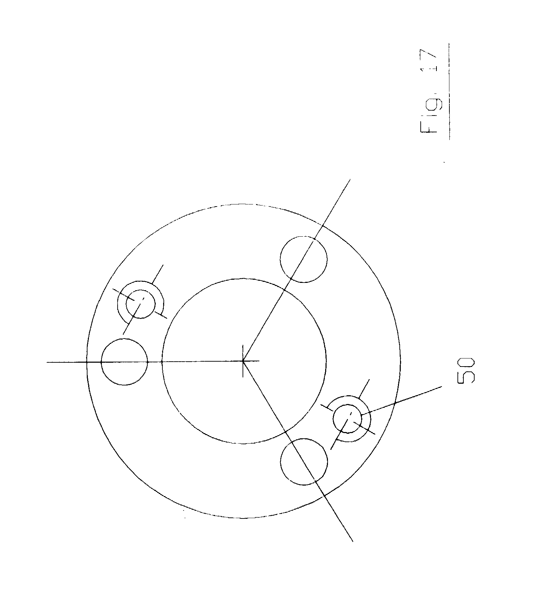

Hierzu zeigt Figur 17 die stirnseitige Aufsicht auf eine Ausführung gemäß Figur 16. Die Verschraubung zwischen Stützring und Walze ist vorzugsweise rotationssymmetrisch. Die Bohrungen 49 mit Abdrückgewinde 50 sind vorzugsweise einander diametral angeordnet, um ein verkantungsfreies Demontieren des Lagers zu erreichen.

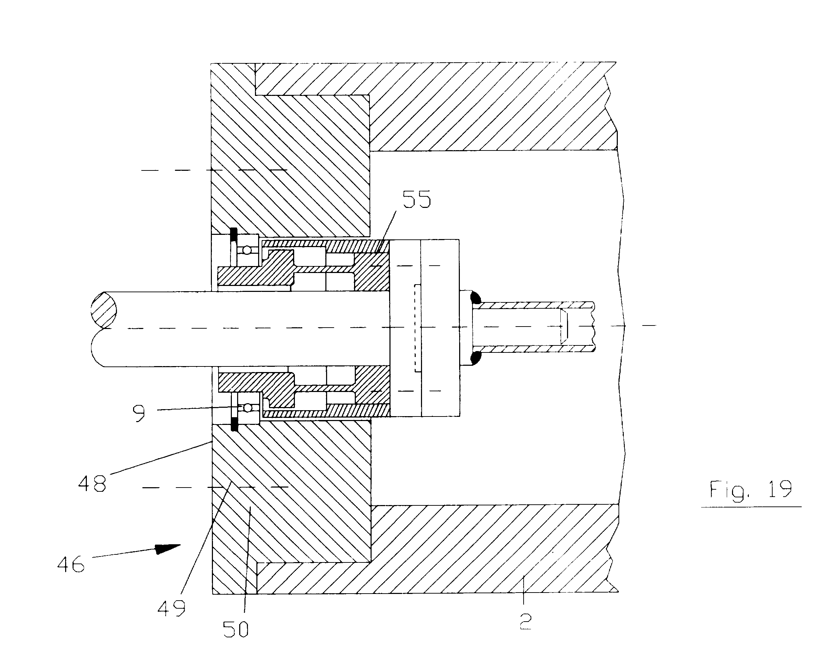

Eine andere Ausführungsform, die eine vereinfachte Demontage der Sensorwalze ermöglicht, zeigt Fig. 19. Hier ist zwischen dem Einspannbereich 6 und dem Außenring des Lagers eine Abschiebehülse 53 vorgesehen. Die Abschiebehülse liegt stirnflächenseitig am Einspannbereich fest. Die gegenüberliegende Stirnfläche besitzt in axialer Richtung ein Spiel zum Lageraußenring. Das Spiel ist sehr gering; das Spiel soll lediglich Berührung vermeiden. In radialer Richtung bildet die Abschiebehülse einen Ringabstand zum Lagerbereich des Sensors, so daß dieser sich frei innerhalb seines Hubes bewegen kann.

Sowohl der Stützring mit Bohrung und Abdrückgewinde, als auch die Abschiebehülse dienen der Demontage des Lagers. Dabei wird zuverlässig verhindert, daß die am Lageraußenring einzuleitenden Kräfte über die Biegefedern auf den Sensor übertragen werden.

Der Unterschied zwischen den beiden Ausführungsformen mit Stützring und Abdrückgewinde, bzw. mit Abschiebehülse ist folgender:

Mit dem Abdrückgewinde wird das komplette Innenleben aus der Umlenkwalze herausgezogen, da der Stirnfläche mit dem Abdrückgewinde die Loslagerseite der Umlenkwalze gegenüberliegt.

Mit der Abschiebehülse wird lediglich die Festlagerseite aus der Umlenkwalze abgeschoben.

Dabei entsteht die hohe Flächenpressung am Lageraußenring infolge der Tatsache, daß am Lageraußenring Umfangslast vorhanden ist und somit ein Pressitz erforderlich ist. Am Lagerinnenring liegt jedoch Punktlast vor, so daß ein Übergangssitz ausreichend ist.

Der Vorteil der Ausführungsform mit der Abschiebehülse liegt darin, daß deren Radialspiel einen Überlastschutz bietet. Berücksichtigt man, daß der Achszapfen sich infolge der Belastung durchbiegen wird, so bewirkt die Abschiebehülse eine Vermeidung von Relativbewegungen zwischen dem federnd gelagerten Teil des Sensors und dem Innendurchmesser der Abschiebehülse. Die Sensorelektronik bleibt somit auch bei engstem Raum geschützt.

Darüber hinaus soll ausdrücklich gesagt sein, daß der Dorn, - von der Einspannseite kommend -, mit zunehmend sich verjüngenden Durchmessern versehen sein kann.

Diese Merkmale allein oder in Verbindung mit den Merkmalen des Anspruchs 17 bzw. die Merkmale des Anspruchs 13 können zum Gegenstand weiterer Schutzrechtsanmeldungen gemacht werden.

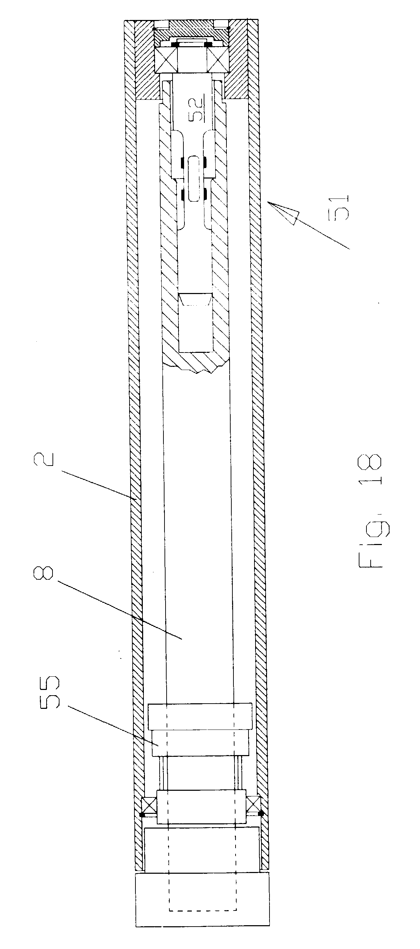

Darüber hinaus zeigt Figur 18, daß der Federweg des freien Endes 51 des Dorns 8 von einem stirnseitig angebrachten, vorzugsweise innerhalb der Umlenkwalze 2 angeordneten Sensor 52, erfaßt wird. Hierzu kann insbesondere ein Sensor verwendet werden, wie er in der DE OS 41 10 429 (=FÜ/1/1) offenbart ist.

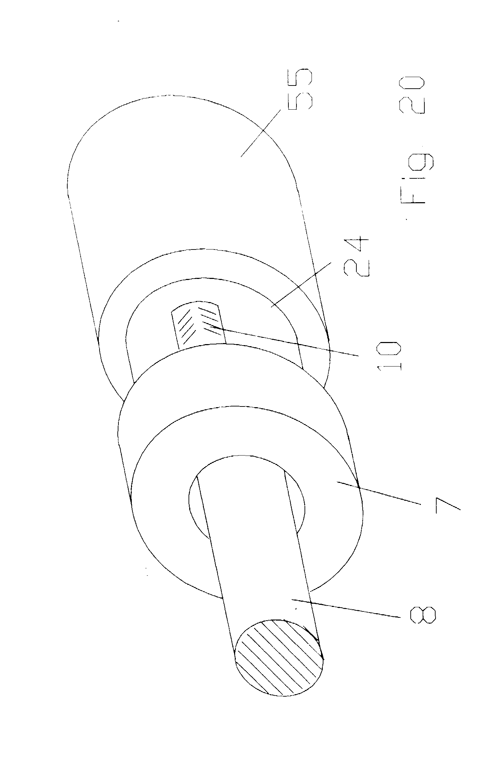

Figur 20 zeigt darüber hinaus einen Meßkörper, der aus einem einstückigen Rohr besteht, und bei welchem die Biegefeder, - im vorliegenden Fall eine -, von umfangsmäßiger Querschnittsverminderung 58 in der Rohrwandung gebildet wird. Die Querschnittsverminderung kann innen oder außen angebracht sein. In diesem Fall sind die DMS 24 als sogenannte Schubspannungs-DMS ausgeführt, deren Orientierung unter +/- 45 Grad zur Längsmittellinie des Dorns geneigt ist. Ein derartiger Meßkörper dient insbesondere zur Aufnahme von sehr großen Lasten.

### BEZUGSZEICHENAUFSTELLUNG

- 1: Zugkraftmeßeinrichtung
- 2: Umlenkeinrichtung
- 3: Meßkörper
- 4: Umlenkrolle
- 5: Umlenkwalze
- 6: Einspannbereich
- 7: Lagerbereich
- 8: Dorn
- 9: Wälzlager
- 10: Biegefeder
- 11: Ringspalt
- 12: Hub
- 13: Anschlag
- 14: sekantiale Ausnehmung
- 15: Abflachung
- 16: Klemmbefestigungseinrichtung
- 17: Radialschlitz
- 18: Axialschraube
- 19a: Flansch mit Gewinde
- 19b: Flansch mit Spannfläche
- 20: Teilungsebene
- 21: konischer Bereich
- 22: Klemmring
- 23: Abweisgewinde
- 24: Dehnungsmeßstreifen (DMS)
- 25: Verbindungsleitungen
- 26: Längsausnehmung
- 27: Oberflächenlängsschlitz
- 28: Längsbohrung
- 29: Abdeckung
- 30: biegeneutrale Ebene
- 31: Faden
- 32: Bahn
- 33: Längsschlitz
- 34: Abdrückgewinde
- 35: Lagerung
- 36: Hebel
- 37: Anlenkung
- 38: Radialebene
- 39: Anschlußmittel
- 40: Achszapfen
- 41: ringförmiger Flansch
- 42: Zentrierung
- 43: Anschraubflansch
- 44: Längskerbe
- 45: Ausnehmung
- 46: Stirnseite
- 47: Ringabsatz
- 48: Stützring
- 49: Bohrung
- 50: Abdrückgewinde
- 51: freies Ende
- 52: Sensor
- 53: Abschiebehülse
- 54: Durchgangsbohrung
- 55: massiver geschlossener Ring
- 56: Radialspiel
- 57: Axialspiel
- 58: Querschnittsverbindung
- T: Tiefe

## Patentansprüche

1. Zugkraftmeßeinrichtung (1) als Sensor zur Messung von Zugkräften an laufenden Endlosmaterialien, welche über eine Umlenkeinrichtung (2) geführt sind und dort mit resultierender Kraft auf den mit Biegefedern abgestützten durchbohrten Lagerbereich (7) eines ortsfest eingespannten Meßkörpers (3) einwirken, deren dabei auftretender Federweg als Verformung erfaßt und ausgewertet wird, wobei die Biegefedern jeweils endseitig sowohl am Lagerbereich als auch am Einspannbereich, der zur Befestigung des Sensors an einem ortsfest eingespannten Dorn der Umlenkeinrichtung dient, festverbunden sind,
**dadurch gekennzeichnet, daß**
1.1 der Einspannbereich (6) einen massiven geschlossenen Ring (55) mit Durchgangsbohrung (54) aufweist,
1.2 der Ring (55) zur Verbindung des Sensors mit dem ortsfest eingespannten Dorn dient,
1.3 mittels der Biegefedern, die den Ring (55) und den Lagerbereich (7) fest verbinden, eine Parallelogrammführung gebildet wird, an welcher der Lagerbereich (7) zur Meßrichtung parallel führbar ist.

2. Zugkraftmeßeinrichtung nach Anspruch 1,
**dadurch gekennzeichnet, daß**
der Meßkörper (3) aus einem einstückigen Rohr besteht, und daß
die Biegefeder (10) von umfangsmäßiger Querschnittsverminderung in der Rohrwandung gebildet wird.

3. Zugkraftmeßeinrichtung nach Anspruch 2,
**dadurch gekennzeichnet, daß**
der Meßkörper (3) aus einem einstückigen Rohr besteht, bei welchem die Biegefedern (10) durch Ausnehmungen in der Rohrwandung, vorzugsweise durch sekantiale Ausnehmungen (14) gebildet werden.

4. Zugkraftmeßeinrichtung nach Anspruch 2 oder 3,
**dadurch gekennzeichnet, daß**
der massive Ring (55) von einem Endbereich des Rohres gebildet wird.

5. Zugkraftmeßeinrichtung nach Anspruch 2 in Verbindung mit 3,
**dadurch gekennzeichnet, daß**
die Biegefedern (10) senkrecht zur Ebene der Ausnehmung wenigstens bereichsweise sekantial abgeflacht sind.

6. Zugkraftmeßeinrichtung nach einem der Ansprüche 1 - 5,
**dadurch gekennzeichnet, daß**
zwischen Ring (55) und Dorn (8) mittels Zentrierungseinrichtungen bezüglich der Dornachse eine zentrierte Fügeverbindung vorgesehen ist.

7. Zugkraftmeßeinrichtung nach einem der Ansprüche 1 - 6,
**dadurch gekennzeichnet, daß**
der Einspannbereich (6) am Dorn (8) mit einer in axialer Richtung wirkenden Klemmbefestigungseinrichtung (16) angebracht ist.

8. Zugkraftmeßeinrichtung nach Anspruch 7,
**dadurch gekennzeichnet, daß**
der Einspannbereich (6) einen radial verlaufenden und den Dorn (8) schneidenden Schlitz (17) aufweist, und daß
quer zur Ebene des Schlitzes (17) eine axiale Spannvorrichtung die beidseits des Schlitzes (17) verbleibenden Flansche (19a,b) gegeneinander verspannt.

9. Zugkraftmeßeinrichtung nach Anspruch 8,
**dadurch gekennzeichnet, daß**
der Einspannbereich (6) in einer Radialebene geteilt ist, wobei jeder der beiden Teile eine von der Teilungsebene konisch (21) verjüngte Bohrung für den Dorn (8) aufweist, und daß
der Dorn (8) einen beidseits konischen Klemmring (22) trägt, gegen welchen die beiden Teile axial verspannbar sind.

10. Zugkraftmeßeinrichtung nach einem der Ansprüche 1 bis 9,
**dadurch gekennzeichnet, daß**
die Umlenkeinrichtung als Umlenkwalze (5) ausgebildet und an den Lagerbereichen (7) von zwei Meßkörpern (3) gelagert ist, welche Meßkörper (3) an jeweils einem und von jeweils einer Stirnseite frei in die Umlenkwalze (5) hineinragenden Dorn (8) angeordnet sind.

11. Zugkraftmeßeinrichtung nach einem der Ansprüche 1 bis 9,
**dadurch gekennzeichnet, daß**
die Umlenkeinrichtung als Umlenkwalze (5) ausgebildet und an zwei Meßkörpern (3) gelagert ist, die
an einem einzigen von lediglich einer Stirnseite in die Umlenkwalze (5) hineinragenden Dorn (8) einspannseitig und endseitig angeordnet sind.

12. Zugkraftmeßeinrichtung nach einem der Ansprüche 1 bis 9,
**dadurch gekennzeichnet, daß**
die Umlenkeinrichtung als Umlenkwalze (5) ausgebildet und an einem einzigen Meßkörper (3) gelagert ist, dessen Lagerbereich (7) zur Aufnahme eines Kippmonent-stabilen Lagers vorgesehen ist, wobei vorzugsweise der Meßkörper (3) an einem einzigen von lediglich einer Stirnseite in die Umlenkwalze (5) hineinragenden Dorn (8) angeordnet ist, und wobei vorzugsweise die Angriffsebene der resultierenden Kraft in der mittleren Normalebene der Biegefedern (10) liegt.

13. Zugkraftmeßeinrichtung nach einem der Ansprüche 1 - 9,
**dadurch gekennzeichnet, daß**
die Umlenkeinrichtung als Umlenkwalze (5) ausgebildet und an einem auskragend befestigten und durch die Umlenkwalze (5) verlaufenden Dorn (8) derart gelagert ist, daß die Lagerung an der, dem Einspannende des Dorns (8) zugewandten Stirnseite an einem Meßkörper (3) nach einem der vorangegangenen Ansprüche erfolgt, und daß der Federweg des freien Endes des Dorns (8) von einem stirnseitig angebrachten, vorzugsweise im wesentlichen innerhalb der Umlenkwalze (5) angeordneten, Sensor erfaßt wird.

14. Zugkraftmeßeinrichtung nach einem der Ansprüche 10 - 13,
**dadurch gekennzeichnet, daß**
im Eintrittsbereich des Dornes (8) in die Umlenkwalze (5) ein nach außen förderndes Abweisgewinde (23) angeordnet ist.

15. Zugkraftmeßeinrichtung nach einem der Ansprüche 1 bis 14,
**dadurch gekennzeichnet, daß**
der Dorn (8) kreisrunden Querschnitt hat, und daß der Einspannbereich (6) eine Bohrung aufweist, deren Innendurchmesser dem Außendurchmesser des Dornes (8) entspricht.

16. Zugkraftmeßeinrichtung nach einem der Ansprüche 1 bis 15,
**dadurch gekennzeichent, daß**
der Dorn (8) eine gegenüber seinem Kern gehärtete Oberfläche aufweist.

17. Zugkraftmeßeinrichtung nach einem der Ansprüche 1 - 16,
**dadurch gekennzeichnet, daß**
der Dorn (8) in wenigstens einer Radialebene, vorzugsweise einer Normalebene, geteilt ist und in der Teilungsebene mit Anschlußmitteln für einen außenständigen und vorzugsweise zur Dornachse koaxialen Achszapfen (40) versehen ist, und daß
der Achszapfen (49) mit dem Einspannbereich (6) verbunden ist.

18. Zugkraftmeßeinrichtung nach Anspruch 17,
**dadurch gekennzeichnet, daß**
der Achszapfen (40) in Längsrichtung hohl ist.

19. Zugkraftmeßeinrichtung nach Anspruch 17 oder 18,
**dadurch gekennzeichnet, daß**
der Achszapfen (40) auf seiner Außenmantelfläche mit plastisch verformbaren Klemmitteln versehen und in einen als Rohr ausgeführten Dorn (8) eingepresst ist.

20. Zugkraftmeßeinrichtung nach einem der Ansprüche 1 - 19,
**dadurch gekennzeichnet, daß**
an wenigstens einer der Stirnseiten der Umlenkwalze (5) eine Innendurchmesserstufe mit Ringabsatz (47) vorgesehen ist, in welcher ein mit dem Außenring eines Wälzlagers verbundener Stützring (48) sitzt, der wenigstens eine stirnseitig eingebrachte und bis auf den Ringabsatz (47) durchgehende Bohrung (49) mit Abdrückgewinde (50) aufweist.

21. Zugkraftmeßeinrichtung nach einem der Ansprüche 1 - 20,
**dadurch gekennzeichnet, daß**
zwischen dem Einspannbereich (6) und dem Außenring eines der Lager eine Abschiebehülse (53) vorgesehen ist, welche mit Radialspiel zum Lagerbereich (7) des Meßkörpers (3) und mit Axialspiel zum Außenring auf dem Einspannbereich (6) vormontiert sitzt.

22. Zugkraftmeßeinrichtung nach einem der Ansprüche 1 bis 21,
**dadurch gekennzeichnet, daß**
die Biegefedern (10) mit elektrischen Meßwertaufnehmern (24) bestückt sind, und daß
elektrische Verbindungsleitungen (25) von den Meßwertaufnehmern (24) entlang des Dornes (8) nach außen geführt sind.

23. Zugkraftmeßeinrichtung nach Anspruch 22,
**dadurch gekennzeichnet, daß**
der Dorn (8) eine Längsausnehmung (26) aufweist, innerhalb dessen die Verbindungsleitungen (25) geführt werden.

24. Zugkraftmeßeinrichtung nach Anspruch 23,
**dadurch gekennzeichnet, daß**
die Längsausnehmung (26) ein Oberflächenlängsschlitz (27) am Dorn ist.

25. Zugkraftmeßeinrichtung nach Anspruch 24,
**dadurch gekennzeichnet, daß**
der Oberflächenlängsschlitz (27) mit einer einrastenden Abdeckung (29) versehbar ist und vorzugsweise einen hinterschnittenen Querschnitt aufweist.

26. Zugkraftmeßeinrichtung nach Anspruch 24 oder 25,
**dadurch gekennzeichnet, daß**
der Oberflächenlängsschlitz (27) im wesentlichen in der biegeneutralen Dornebene angeordnet ist.

27. Zugkraftmeßeinrichtung nach Anspruch 26,
**dadurch gekennzeichnet, daß**
der Oberflächenlängsschlitz (27) paarweise vorhanden und zueinander paarweise diametral angeordnet ist.

28. Zugkraftmeßeinrichtung nach einem der Ansprüche 1 bis 27,
dadurch gekennzeichnet, daß
die Winkellage zwischen der resultierenden Kraft und der Meßachse der Zugkraftmeßeinrichtung durch Drehung des Dorns (8) in einer drehbar gelagerten Einspanneinrichtung verstellbar ist.

## Claims

1. Tensile force measuring apparatus (1) as a sensor for measuring tensile forces on continuous running materials, which are guided by way of a deflecting device (2) and at which site influence with the resulting force the perforated bearing region (7), supported by torsion springs, of a fixedly clamped measuring body (3), the resulting resilient displacement of the deflecting device is recorded as deformation and evaluated, wherein the torsion springs are fixedly connected in each case at the end both at the bearing region and also at the clamping region, which serves to attach the sensor to a fixedly clamped mandrel of the deflecting device, characterised in that
1.1 the clamping region (6) comprises a solid, closed ring (55) comprising a through-going bore (54),
1.2 the ring (55) serves to connect the sensor to the fixedly clamped mandrel,
1.3 a parallelogram arrangement is formed by means of the torsion springs, which fixedly connect the ring (55) and the bearing region (7) and the said bearing region (7) can be guided in parallel with the said parallelogram arrangement towards the measuring device.

2. Tensile force measuring device according to claim 1, characterised in that the measuring body (3) consists of a one-piece tube and that the torsion spring (10) is formed by a circumferential reduction in the cross-section of the tube wall.

3. Tensile force measuring device according to claim 2, characterised in that the measuring body (3) consists of a one-piece tube, wherein the torsion springs (10) are formed by cut-outs in the tube wall, preferably by virtue of secant cut-outs (14).

4. Tensile force measuring device according to claim 2 or 3, characterised in that the solid ring (55) is formed by an end region of the tube.

5. Tensile force measuring device according to claim 2 in conjunction with claim 3, characterised in that the torsion springs (10) are flattened in a secant manner perpendicular to the plane of the cut-out at least in regions.

6. Tensile force measuring device according to any one of claims 1 to 5, characterised in that a centring joint connection with respect to the mandrel axis is provided between the ring (55) and the mandrel (8) by means of centring devices.

7. Tensile force measuring device according to any one of claims 1 to 6, characterised in that the clamping region (6) is attached to the mandrel (8) by means of a clamping attachment device (16) which functions in the axial direction.

8. Tensile force measuring device according to claim 7, characterised in that the clamping region (6) comprises a slot (17) which extends radially and cuts the mandrel (8) and that transverse to the plane of the slot (17) an axial clamping device clamps together the flanges (19a, b) remaining on both sides of the slot (17).

9. Tensile force measuring device according to claim 8, characterised in that the clamping region (6) is divided in a radial plane, wherein each of the two parts comprises for the mandrel (8) a bore which tapers conically (21) from the dividing plane and that the mandrel (8) supports a clamping ring (22) which is conical on both sides and against which the two parts can be axially clamped.

10. Tensile force measuring device according to any one of claims 1 to 9, characterised in that the deflecting device is formed as a deflecting roller (5) and is mounted on the bearing regions (7) of two measuring bodies (3), which measuring bodies (3) are disposed respectively on a mandrel (8) which protrudes in each case from an end side freely into the deflecting roller (5).

11. Tensile force measuring device according to any one of claims 1 to 9, characterised in that the deflecting device is formed as a deflecting roller (5) and is mounted on two measuring bodies (3), which are disposed at the clamping side and end side on a single mandrel (8) which protrudes from only one end side into the deflecting roller (5).

12. Tensile force measuring device according to any one of claims 1 to 9, characterised in that the deflecting device is formed as a deflecting roller (5) and is mounted on a single measuring body (3), whose bearing region (7) is provided for the purpose of receiving a bearing which is stable with respect to the moment of tilt, wherein preferably the measuring body (3) is disposed on a single mandrel (8) which protrudes from only one end side into the deflecting roller (5) and wherein preferably the plane of contact of the resulting force lies in the middle normal plane of the torsion springs (10).

13. Tensile force measuring device according to any one of claims 1 to 9, characterised in that the deflecting device is formed as a deflecting roller (5) and is mounted on a mandrel (8) which is attached in an overhanging manner and extends through the deflecting roller (5) in such a manner that the bearing arrangement is provided on the end side facing the clamping end of the mandrel (8) on a measuring body (3) according to any one of the preceding claims, and that the resilient displacement of the free end of the mandrel (8) is recorded by a sensor which is attached at the end side and is disposed preferably substantially within the deflecting roller (5).

14. Tensile force measuring device according to any one of claims 10 to 13, characterised in that a thread (23) which deflects in an outward direction is disposed in the entry region of the mandrel (8) into the deflecting roller (5).

15. Tensile force measuring device according to any one of claims 1 to 14, characterised in that the mandrel (8) has a circular cross-section and that the damping region (6) comprises a bore whose internal diameter corresponds to the external diameter of the mandrel (8).

16. Tensile force measuring device according to any one of claims 1 to 15, characterised in that the mandrel (8) comprises a surface which is hardened with respect to its core.

17. Tensile force measuring device according to any one of claims 1 to 16, characterised in that the mandrel (8) is divided in at least one radial plane, preferably a normal plane, and is provided in the dividing plane with connection means for an external spindle (40) which extends preferably coaxially with the mandrel axis, and that the spindle (49 [sic]) is connected to the clamping region (6).

18. Tensile force measuring device according to claim 17, characterised in that the spindle (40) is hollow in the longitudinal direction.

19. Tensile force measuring device according to claim 17 or 18, characterised in that the spindle (40) is provided on its outer peripheral surface with plastic deformable clamping means and is pressed into a mandrel (8) which is designed as a tube.

20. Tensile force measuring device according to any one of claims 1 to 19, characterised in that a step in the intemal diameter is provided with an annular shoulder (47) on at least one of the end sides of the deflecting roller (5) and sitting in the said intemal diameter step is a support ring (48) which is connected to the outer ring of a roller bearing and which comprises at least one bore (49) which is provided at the end side, is through-going as far as the annular shoulder (47) and comprises a pressure-exerting thread (50).

21. Tensile force measuring device according to any one of claims 1 to 20, characterised in that a stripping sleeve (53) is provided between the clamping region (6) and the outer ring of one of the bearings and the said stripping sleeve sits premounted on the clamping region with radial clearance with respect to the bearing region (7) of the measuring body (3) and with axial clearance with respect to the outer ring.

22. Tensile force measuring device according to any one of claims 1 to 21, characterised in that the torsion springs (10) are equipped with electric measured value recorders (24) and that electric connection lines (25) are guided outwards from the measured value recorders (24) along the mandrel (8).

23. Tensile force measuring device according to claim 22, characterised in that the mandrel (8) comprises a longitudinal cut-out (26), within which the connection lines (25) are guided.

24. Tensile force measuring device according to claim 23, characterised in that the longitudinal cut-out (26) is a surface longitudinal slot (27) on the mandrel.

25. Tensile force measuring device according to claim 24, characterised in that the surface longitudinal slot (27) can be provided with a latching cover (29) and preferably comprises an undercut cross-section.

26. Tensile force measuring device according to claim 24 or 25, characterised in that the surface longitudinal slot (27) is disposed substantially in the torsion-neutral plane of the mandrel.

27. Tensile force measuring device according to claim 26, characterised in that the surface longitudinal slot (27) is provided in pairs and is disposed in pairs diametrically opposed to each other.

28. Tensile force measuring device according to any one of claims 1 to 27, characterised in that the angular position between the resulting force and the measuring axis of the tensile force measuring device can be adjusted by rotating the mandrel (8) in a rotatably mounted clamping device.

## Revendications

1. Dynamomètre de traction (1) conçu comme un capteur pour mesurer des forces de traction sur des matériaux sans fin en circulation qui sont guidés par l'intermédiaire d'un dispositif de renvoi (2) et qui agissent à cet endroit, avec la force résultante, sur la zone de palier (7), percée et supportée par des ressorts de flexion, d'un corps de mesure (3) monté de façon fixe, la course élastique qui est alors définie étant enregistrée sous la forme d'une déformation et évaluée, étant précisé que les ressorts de flexion sont reliés fermement, côté extrémités, aussi bien à la zone de palier qu'à la zone de blocage qui sert à la fixation du capteur à un mandrin, monté de façon fixe, du dispositif de renvoi, caractérisé
1.1 en ce que la zone de blocage (6) comporte une bague (55) pleine, fermée et pourvue d'un perçage de passage (54),
1.2 en ce que la bague (55) sert à relier le capteur au mandrin monté de façon fixe, et
1.3 en ce que grâce aux ressorts de flexion qui relient fermement la bague (55) et la zone de palier (7), il se forme un guidage par parallélogramme au niveau duquel la zone de palier (7) est apte à être guidée parallèlement par rapport au sens de mesure.

2. Dynamomètre de traction selon la revendication 1, caractérisé en ce que le corps de mesure (3) se compose d'un tube d'une seule pièce et en ce que le ressort de flexion (10) est défini par une réduction de section transversale sur la circonférence de la paroi du tube.

3. Dynamomètre de traction selon la revendication 2, caractérisé en ce que le corps de mesure (3) se compose d'un tube d'une seule pièce sur lequel les ressorts de flexion (10) sont définis par des creux prévus dans la paroi du tube, de préférence par des creux sécants (14).

4. Dynamomètre de traction selon la revendication 2 ou 3, caractérisé en ce que la bague pleine (55) est définie par une zone d'extrémité du tube.

5. Dynamomètre de traction selon la revendication 2 associée à la revendication 3, caractérisé en ce que les ressorts de flexion (10), au moins dans certaines zones, sont aplatis d'une manière sécante, perpendiculairement au plan du creux.

6. Dynamomètre de traction selon l'une des revendications 1 à 5, caractérisé en ce qu'il est prévu entre la bague (55) et le mandrin (8), grâce à des dispositifs de centrage par rapport à l'axe du mandrin, une liaison par assemblage centrée.

7. Dynamomètre de traction selon l'une des revendications 1 à 6, caractérisé en ce que la zone de blocage (6) prévue sur le mandrin (8) est pourvue d'un dispositif de fixation par serrage (16) qui agit dans le sens axial.

8. Dynamomètre de traction selon la revendication 7, caractérisé en ce que la zone de blocage (6) présente une fente radiale (17) qui coupe le mandrin (8), et en ce que transversalement par rapport au plan de la fente (17), un dispositif de blocage axial bloque l'une par rapport à l'autre les brides (19a,b) qui restent des deux côtés de la fente (17).

9. Dynamomètre de traction selon la revendication 8, caractérisé en ce que la zone de blocage (6) est divisée dans un plan radial, chacune des deux parties présentant un perçage qui va en s'effilant suivant une forme conique (21) à partir du plan de séparation et qui est prévu pour le mandrin (8), et en ce que le mandrin (8) porte une bague de serrage (22) qui est conique des deux côtés et contre laquelle les deux parties peuvent être bloquées axialement.

10. Dynamomètre de traction selon l'une des revendications 1 à 9, caractérisé en ce que le dispositif de renvoi est conçu comme un cylindre de renvoi (5) et est monté sur les zones de palier (7) de deux corps de mesure (3), lesquels corps de mesure (3) sont disposés chacun sur un mandrin (8) qui pénètre librement par un côté frontal dans le cylindre de renvoi (5).

11. Dynamomètre de traction selon l'une des revendications 1 à 9, caractérisé en ce que le dispositif de renvoi est conçu comme un cylindre de renvoi (5) et est monté sur deux corps de mesure (3) qui sont disposés côté blocage et côté extrémité sur un mandrin unique (8) qui pénètre par un seul côté frontal dans le cylindre de renvoi (5).

12. Dynamomètre de traction selon l'une des revendications 1 à 9, caractérisé en ce que le dispositif de renvoi est conçu comme un cylindre de renvoi (5) et est monté sur un seul corps de mesure (3) dont la zone de palier (7) est destinée à recevoir un palier à couple de renversement stable, étant précisé que le corps de mesure (3) est disposé de préférence sur un mandrin unique (8) qui pénètre par un seul côté frontal dans le cylindre de renvoi (5), et que le plan d'action de la force résultante est situé de préférence dans le plan normal médian des ressorts de flexion (10).

13. Dynamomètre de traction selon l'une des revendications 1 à 9, caractérisé en ce que le dispositif de renvoi est conçu comme un cylindre de renvoi (5) et est monté sur un mandrin (8) fixé en saillie et traversant ledit cylindre de renvoi, de telle sorte que le montage a lieu selon l'une des revendications précédentes sur un corps de mesure (3) sur le côté frontal tourné vers l'extrémité de blocage du mandrin (8), et en ce que la course élastique de l'extrémité libre du mandrin (8) est enregistrée par un capteur prévu côté frontal et disposé de préférence globalement à l'intérieur du cylindre de renvoi (5).

14. Dynamomètre de traction selon l'une des revendications 10 à 13, caractérisé en ce qu'il est prévu, dans la zone d'entrée du mandrin (8) dans le cylindre de renvoi (5), un filetage de refoulement (23) qui agit vers l'extérieur.

15. Dynamomètre de traction selon l'une des revendications 1 à 14, caractérisé en ce que le mandrin (8) a une section transversale ronde et en ce que la zone de blocage (6) présente un perçage dont le diamètre intérieur correspond au diamètre extérieur du mandrin (8).

16. Dynamomètre de traction selon l'une des revendications 1 à 15, caractérisé en ce que le mandrin (8) présente une surface trempée par rapport à son noyau.

17. Dynamomètre de traction selon l'une des revendications 1 à 16, caractérisé en ce que le mandrin (8) est divisé dans au moins un plan radial, de préférence dans un plan normal, et est pourvu dans le plan de séparation de moyens de raccordement pour un tourillon (40) situé à l'extérieur et de préférence coaxial par rapport à l'axe du mandrin, et en ce que le tourillon (40) est relié à la zone de blocage (6).

18. Dynamomètre de traction selon la revendication 17, caractérisé en ce que le tourillon (40) est creux dans le sens longitudinal.

19. Dynamomètre de traction selon la revendication 17 ou 18, caractérisé en ce que le tourillon (40) est pourvu sur sa surface d'enveloppe extérieure de moyens de serrage aptes à subir une déformation plastique, et est enfoncé dans un mandrin (8) conçu comme un tube.

20. Dynamomètre de traction selon l'une des revendications 1 à 19, caractérisé en ce qu'il est prévu sur au moins un côté frontal du cylindre de renvoi (5) un étagement du diamètre intérieur qui est pourvu d'un décrochement annulaire (47) et dans lequel est logée une bague d'appui (48) reliée à la bague extérieure d'un palier à roulement et présentant au moins un perçage (49) qui est réalisé côté frontal, qui va jusqu'à l'épaulement annulaire (47) et qui est pourvu d'un filetage de refoulement (50).

21. Dynamomètre de traction selon l'une des revendications 1 à 20, caractérisé en ce qu'il est prévu entre la zone de blocage (6) et la bague extérieure de l'un des paliers un manchon pousseur (53) qui est monté préalablement sur la zone de blocage (6) avec un jeu radial par rapport à la zone de palier (7) du corps de mesure (3) et avec un jeu axial par rapport à la bague extérieure.

22. Dynamomètre de traction selon l'une des revendications 1 à 21, caractérisé en ce que les ressorts de flexion (10) sont garnis de capteurs électriques de valeurs de mesure (24) et en ce que des lignes de liaison électriques (25) vont des capteurs (24) vers l'extérieur en longeant le mandrin (8).

23. Dynamomètre de traction selon la revendication 22, caractérisé en ce que le mandrin (8) présente un creux longitudinal (26) à l'intérieur duquel passent les lignes de liaison (25).

24. Dynamomètre de traction selon la revendication 23, caractérisé en ce que le creux longitudinal (26) consiste en une fente longitudinale superficielle (27) sur le mandrin.

25. Dynamomètre de traction selon la revendication 24, caractérisé en ce que la fente longitudinale superficielle (27) peut être pourvue d'un recouvrement à encliquetage (29) et présente de préférence une section transversale contre-dépouillée.

26. Dynamomètre de traction selon la revendication 24 ou 25, caractérisé en ce que la fente longitudinale superficielle (27) est disposée globalement dans le plan du mandrin neutre en matière de flexion.

27. Dynamomètre de traction selon la revendication 26, caractérisé en ce qu'il est prévu deux fentes longitudinales superficielles (27) qui sont diamétralement opposées.

28. Dynamomètre de traction selon l'une des revendications 1 à 27, caractérisé en ce que la position angulaire entre la force résultante et l'axe de mesure du dynamomètre de traction est réglable grâce à une rotation du mandrin (8) dans un dispositif de blocage monté rotatif.
